# EUROPEAN PATENT APPLICATION

(11) **EP 4 696 465 A1**
(43) Date of publication of application: **18.02.2026**
(21) Application number: 24788645.0
(22) Date of filing: 03.04.2024
(51) Int. Cl.: B25J 13/00, B25J 9/16, B25J 9/22

(54) **ROBOT, ROBOT CONTROL PROGRAM, INFORMATION PROCESSING DEVICE, TRAINING DATA GENERATION METHOD, OPERATION PARAMETER GENERATION METHOD, PROGRAM, AND TRAINED MODEL GENERATION METHOD**

(30) Priority: 10.04.2023 JP 2023063764; 03.07.2023 JP 2023109653; 02.08.2023 JP 2023126494; 18.08.2023 JP 2023133490; 18.08.2023 JP 2023133515
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2024/013833
(87) International publication number: WO 2024/214620

(57) **Abstract**

A humanoid robot (robot) includes: a gripping portion that includes a palm portion serving as a base for holding cloth (workpiece) and plural finger portions radially extended from the palm portion; a palm sensor unit that is provided at the palm portion and detects workpiece information including a shape and a disposition of the workpiece; and a control unit that controls holding and an operation of the workpiece by the gripping portion based on an operation parameter obtained by inputting a detection result of the palm sensor unit into a trained model learned using learning data representing a combination of an operation of a hand of a skilled worker during work and an operation of a sewing machine and executing arithmetic processing of the learning model.

## Description

### Technical Field

The present disclosure relates to a robot, a robot control program, an information processing apparatus, a learning data generation method, an operation parameter generation method, a program, and a learned model generation method.

### Background Art

In a production line of a factory, a humanoid robot for automatically performing work is used. Japanese Patent Application Laid-Open (JP-A) No. 2019-093506 discloses posture control of a humanoid robot.

WO2011/001569 discloses that a robot arm is driven by an elastic actuator, has a plurality of joints, and is controlled by a hand tip support member that is disposed at a hand tip portion of the robot arm and supports the robot arm by coming into contact with a support surface, and a control unit that controls a contact force between the hand tip support member and the support surface and simultaneously controls a position and a posture of the hand tip portion of the robot arm.

### SUMMARY OF INVENTION

### Technical Problem

However, work such as sewing that requires fine motion of a hand tip is conventionally performed by a skilled person.

Even though the work is handled by making the structure of a gripping portion of the robot have a finger type, it is difficult to reproduce the motion of a finger and an arm of a skilled person.

An object of the disclosure is to obtain a robot, a robot control program, an information processing apparatus, a learning data generation method, an operation parameter generation method, a program, and a learned model generation method, that are capable of operating a workpiece with a gripping portion like a skilled person.

### Solution to Problem

A robot according to a first aspect includes: a gripping portion that includes a palm portion serving as a base for holding a workpiece and a plurality of finger portions radially extended from the palm portion; a palm sensor unit that is provided at the palm portion and detects workpiece information including a shape and a disposition of the workpiece; and a control unit that controls holding and an operation of the workpiece by the gripping portion in a case in which work using the machine tool is performed with the gripping portion based on an operation parameter obtained by inputting a detection result of the palm sensor unit into a trained model learned using learning data representing a combination of an operation of a hand of a skilled worker during work and an operation of a machine tool and executing arithmetic processing of the learning model.

In this robot, the control unit controls the holding and the operation of the workpiece in a case where work using the machine tool is performed with the gripping portion based on an operation parameter obtained by inputting the detection result of the palm sensor unit into the trained model learned by using learning data representing a combination of the operation of the hand of the skilled worker during the work and the operation of the machine tool, and executing arithmetic processing of the learning model. As a result, the operation of the workpiece by the gripping portion can be performed like a skilled person.

According to a second aspect, in the robot according to the first aspect, two of the gripping portions corresponding to a right hand and a left hand are provided, the number of finger portions in one of the gripping portions is five, the workpiece is cloth, the machine tool is a sewing machine, and the work is sewing.

In this robot, sewing work of the cloth by the sewing machine can be performed by two gripping portions each having five finger portions in a similar manner to a skilled person.

According to a third aspect, in the robot according to the first aspect, the learning model is a model re-learned using a difference between a target work result and an actual work result by the robot.

In this robot, the learning model is re-learned using the difference between the target work result and the actual work result by the robot, whereby it is possible to improve the work accuracy.

According to a fourth aspect, in the robot according to the first aspect, a parameter given to the learning model is determined according to an aspect of the workpiece and the work.

In this robot, since the parameter given to the learning model is determined according to the aspect of the workpiece and the work, it is possible to more accurately perform the operation of the workpiece by the gripping portion.

According to a fifth aspect, in the robot according to the first aspect, the workpiece includes an identifier indicating a specific position, and the control unit controls the holding and the operation of the workpiece by the gripping portion based on the detected identifier.

According to a sixth aspect, in the robot according to the fifth aspect, the control unit inputs the detection result into a trained model re-learned in a device that has output a difference between a position of the identifier in a target work result and a position of the identifier in an actual work result.

According to a seventh aspect, in the robot according to the fifth aspect, the identifier is an identification code capable of reading character information, and the character information includes at least one of identification information of the workpiece, a work order, or the specific position.

According to an eighth aspect, in the robot according to the fifth aspect, the control unit controls the holding and the operation of the workpiece by the gripping portion based on information from an image capturing device that captures an image of a blind spot region that is a region that cannot be detected by the palm sensor unit.

A robot control program according to a ninth aspect causes a computer to operate as the control unit according to any one of the first to eighth aspects.

An information processing apparatus according to a tenth aspect includes: an acquisition unit that acquires learning data representing a combination of an operation of a skilled worker during work and an operation of a device used by the skilled worker; a specifying unit that specifies, from the acquired learning data, first learning data representing specific work in which the skilled worker uses a specific device; and a conversion unit that converts the specified first learning data into second learning data for causing a robot including one or a plurality of tools corresponding to the specific device to perform an operation corresponding to the specific work.

In an information processing apparatus according to an eleventh aspect, in the information processing apparatus according to the tenth aspect, the conversion unit converts the first learning data based on a conversion table that stores the first learning data and the second learning data in association with each other.

In an information processing apparatus according to a twelfth aspect, in the information processing apparatus according to the eleventh aspect, the learning data includes data of a device label that is a label indicating a type of the device and is given to the operation of the device, and the conversion unit converts the learning data by changing the device label of the first learning data to a tool label that is a label indicating a type of the tool corresponding to the device.

An information processing apparatus according to a thirteenth aspect includes: a specifying unit that specifies a first operation parameter representing specific work in which a robot uses a specific device, from an operation parameter obtained by inputting a detection result of a sensor unit included in the robot into a trained model learned using learning data representing a combination of an operation of a skilled worker during work and an operation of a device used by the skilled worker and executing arithmetic processing of the learning model; and a conversion unit that converts the specified first operation parameter into a second operation parameter for causing the robot including one or a plurality of tools corresponding to the specific device to perform an operation corresponding to the specific work.

In an information processing apparatus according to a fourteenth aspect, in the information processing apparatus according to the thirteenth aspect, the conversion unit converts the first operation parameter based on a conversion table that stores the first operation parameter and the second operation parameter in association with each other.

A learning data generation method according to a fifteenth aspect causes a computer to execute a process including: acquiring learning data representing a combination of an operation of a skilled worker during work and an operation of a device used by the skilled worker; specifying first learning data representing specific work in which the skilled worker uses a specific device, from the acquired learning data; and converting the specified first learning data into second learning data for causing a robot including one or a plurality of tools corresponding to the specific device to perform an operation corresponding to the specific work.

An operation parameter generation method according to a sixteenth aspect causes a computer to execute a process including: specifying a first operation parameter representing specific work in which a robot uses a specific device, from an operation parameter obtained by inputting a detection result of a sensor unit included in the robot into a trained model learned using learning data representing a combination of an operation of a skilled worker during work and an operation of a device used by the skilled worker and executing arithmetic processing of the learning model; and converting the specified first operation parameter into a second operation parameter for causing the robot including one or a plurality of tools corresponding to the specific device to perform an operation corresponding to the specific work.

An information processing apparatus according to a seventeenth aspect includes: an acquisition unit that acquires information of a workpiece; a switching unit that performs switching between a plurality of trained models learned using learning data representing a combination of an operation of a hand of a skilled worker during work and an operation of a machine tool based on the information of the workpiece acquired by the acquisition unit; and a control unit that controls holding and an operation of the workpiece by a gripping portion included in a robot based on an operation parameter obtained by inputting a detection result of a sensor unit included in the robot into the learning model switched by the switching unit and executing arithmetic processing of the learning model.

In an information processing apparatus according to an eighteenth aspect, in the information processing apparatus according to the seventeenth aspect, the switching unit determines one of a plurality of work methods based on the information of the workpiece acquired by the acquisition unit, the control unit controls the robot based on the work method determined by the switching unit, and the plurality of work methods includes a first work method of performing work by only one of the robots, and a second work method of performing the work by being shared by a plurality of the robots.

In an information processing apparatus according to a nineteenth aspect in the information processing apparatus according to the eighteenth aspect, the plurality of trained models are learning models learned for each type of the workpiece, the first work method is a cell production method, and the second work method is a line production method.

An information processing apparatus according to a 20th aspect includes: a learning unit that learns a learning model by using first learning data representing a combination of an operation of a skilled worker during work and an operation of a device used by the skilled worker; an acquisition unit that acquires a first work step of a robot from a simulation of work using the device by the robot, the simulation being executed by using the learned model learned by the learning unit; and a change unit that changes the first work step to a second work step in which a part of the first work step is changed based on a predetermined criterion, in which the learning unit re-learns the learned model by using second learning data representing a combination of an operation of the robot obtained from the simulation of the work of the robot and the operation of the device based on the second work step.

In an information processing apparatus according to a 21st aspect in the information processing apparatus according to the 20th aspect, the predetermined criterion is a comparison result between a target result that is a target work result and a work result in a case in which the simulation is executed by the execution unit.

In an information processing apparatus according to a 22nd aspect in the information processing apparatus according to the 21st aspect, the second work step is a work step in which at least one step is deleted from the first work step divided into a plurality of steps.

In an information processing apparatus according to a 23rd aspect in the information processing apparatus according to the 22nd aspect, the robot includes two gripping portions corresponding to a right hand and a left hand, the number of the finger portions in one of the gripping portions is five, the device is a sewing machine, and the work is sewing.

In an information processing apparatus according to a 24th aspect in the information processing apparatus according to the 21st aspect, the second work step is a work step in which at least one step is added to the first work step.

A program according to a 25th aspect causes a computer to operate as the information processing apparatus according to any one of the tenth to fourteenth aspects and the seventeenth to 24th aspects.

A learned model generation method according to a 26th aspect causes a computer to execute a process including: learning a learning model by using first learning data representing a combination of an operation of a skilled worker during work and an operation of a device used by the skilled worker; acquiring a first work step of a robot from a simulation of work using the device by the robot, the simulation being executed by using the learned model learned by the learning unit; changing the first work step to a second work step in which a part of the first work step is changed based on a predetermined criterion; and re-learning the learned model by using second learning data representing a combination of an operation of the robot obtained from the simulation of the work of the robot and the operation of the device based on the second work step.

The outline of the above disclosure does not enumerate all the necessary features of the present invention. A subcombination of these feature groups may also be the invention. Advantageous Effects of Invention

According to the disclosure, it is possible to obtain a robot, a robot control program, an information processing apparatus, a learning data generation method, an operation parameter generation method, a program, and a learned model generation method, that are capable of operating a workpiece with a gripping portion like a skilled person.

### BRIEF DESCRIPTION OF DRAWINGS

Fig. 1 is a front view of a humanoid robot according to a first embodiment.
Fig. 2 is a perspective view of a gripping portion according to the first embodiment.

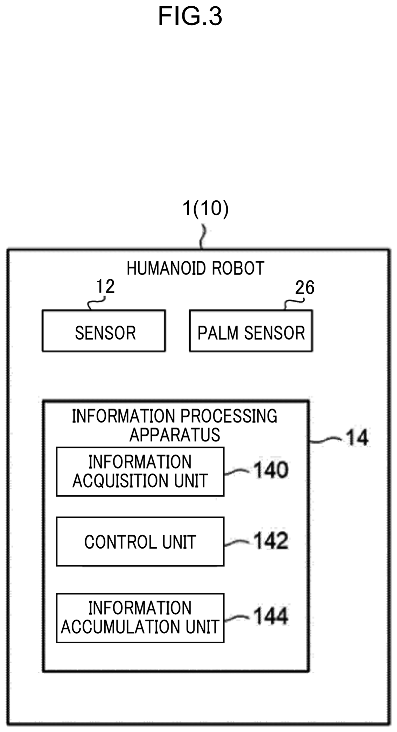

Fig. 3 is a diagram schematically illustrating an example of a functional configuration of the humanoid robot according to the first embodiment.
Fig. 4 is a diagram schematically illustrating an example of a processing routine executed by an information processing apparatus according to the first embodiment.
Fig. 5 is a flowchart illustrating a control procedure in a case in which a workpiece is gripped and operated by the gripping portion in conjunction with the entire operation of the humanoid robot of Fig. 4.
Fig. 6 is a diagram schematically illustrating an example of computer hardware functioning as the information processing apparatus according to the first embodiment.
Fig. 7 is a perspective view illustrating a state in which two sheets of cloth are overlapped and set on a sewing machine, according to the first embodiment.
Fig. 8 is a perspective view illustrating a state in which each of two sheets of cloth is gripped by the gripping portion of the robot according to the first embodiment.
Fig. 9 is a perspective view illustrating a state in which two sheets of cloth are operated by the gripping portion with the progress of sewing according to the first embodiment.
Fig. 10 is a second perspective view schematically illustrating an outline of a state in which two sheets of cloth are overlapped and set on a sewing machine according to a second embodiment.
Fig. 11 is a diagram schematically illustrating an example of a functional configuration of a humanoid robot and a peripheral device thereof according to the second embodiment.
Fig. 12 is a flowchart illustrating a flow of a difference output process of outputting a difference in a position of a two-dimensional code according to the second embodiment.
Fig. 13 is a flowchart illustrating a flow of a re-learning process in which a learning device re-learns a learning model according to the second embodiment.
Fig. 14 is a flowchart illustrating a flow of an acquisition process for an information processing apparatus to acquire an operation parameter according to the second embodiment.
Fig. 15 is a diagram schematically illustrating an example of functions of a control system that controls a humanoid robot and each device according to a third embodiment.
Fig. 16 is a view illustrating an outline of a gripping portion replaceable with a robot tool according to the third embodiment.
Fig. 17 is a view illustrating an example of a state in which the gripping portion is replaced with the robot tool according to the third embodiment.
Fig. 18 is a front view of the gripping portion according to the third embodiment, and Fig. 18(B) is a table illustrating an example of a list of work types of the gripping portion according to the second embodiment.
Fig. 19 is a diagram schematically illustrating an example of a data structure of a conversion table according to the third embodiment.
Fig. 20 is a flowchart illustrating a flow of a learning data conversion process that is a process of converting learning data according to the third embodiment.
Fig. 21 is a diagram schematically illustrating an example of a functional configuration of a humanoid robot according to a fourth embodiment.
Fig. 22 is a diagram schematically illustrating an example of a data structure of a conversion table according to the fourth embodiment.
Fig. 23 is a flowchart illustrating a flow of an operation parameter conversion process of converting an operation parameter according to the fourth embodiment.
Fig. 24 is a diagram schematically illustrating an example of a functional configuration of a humanoid robot according to a fifth embodiment.
Fig. 25 illustrates a trained model that is stored in a storage device and has been learned for each different workpiece, according to the fifth embodiment.
Fig. 26 is a flowchart illustrating a determination process of determining a production method according to the fifth embodiment.
Fig. 27 is a flowchart illustrating a flow of a control process of controlling the humanoid robot in a case of a cell production method according to the fifth embodiment.
Fig. 28 is a flowchart illustrating a flow of a control process of controlling the humanoid robot 1 in a case of a line production method according to the fifth embodiment.
Fig. 29 is a diagram schematically illustrating an example of a functional configuration of an information processing apparatus according to a sixth embodiment.
Fig. 30 is a flowchart illustrating a flow of a re-learning process of re-learning a learning model according to the sixth embodiment.
Fig. 31 is a flowchart illustrating a flow of a step change process for improving efficiency of a work step according to the sixth embodiment.
Fig. 32 is a flowchart illustrating a flow of a step change process of adding a predetermined step according to a modification example of the sixth embodiment.

### DESCRIPTION OF EMBODIMENTS

Hereinafter, the disclosure will be described through embodiments of the disclosure, but the following embodiments do not limit the disclosure according to the claims. Not all combinations of features described in the embodiments are essential to the solution of the disclosure.

### (First Embodiment)

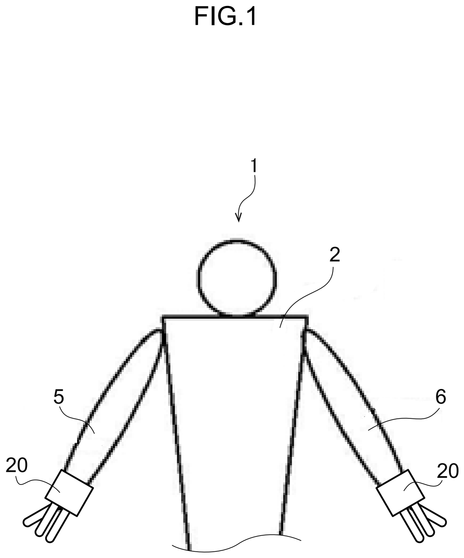

Fig. 1 is a front view of a humanoid robot as an example of a robot according to the present embodiment. As illustrated in Fig. 1, a humanoid robot 1 according to the present embodiment includes an upper body 2, is disposed near a sewing machine in a sewing factory, and performs sewing work by operating sheets of cloth 100 and 101 as an example of a workpiece. The humanoid robot 1 includes a gripping portion 20, a palm sensor unit 26, and a control unit 142. Here, the sewing machine is an example of a machine tool.

The upper body 2 has two arm portions 5 and 6. The arm portions 5 and 6 are rotatably attached to the left and right of the upper body 2. Gripping portions 20 (to be described in detail later) for gripping an object are attached to distal ends of the arm portions 5 and 6. The number of arm portions is not limited to two, and may be one or three or more.

Driving of the humanoid robot 1 according to the present embodiment is controlled by a control system 10 mounted in the humanoid robot 1.

### (Structure of Gripping Portion 20)

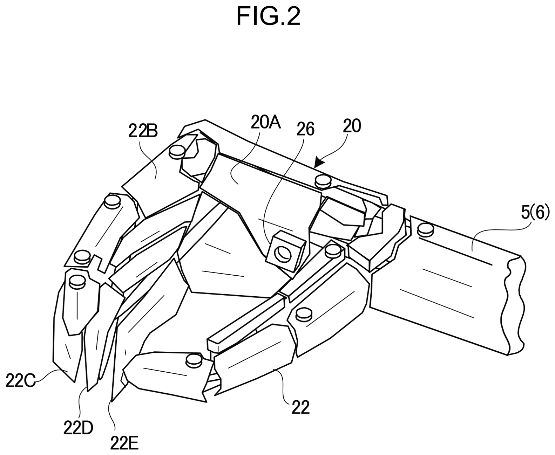

As illustrated in Fig. 2, the gripping portions 20 attached to the distal ends of the arm portions 5 and 6 have a hand structure similar to that of a human, and the gripping portions 20 are rotatably attached to the arm portions 5 and 6 (Intelligent Hand System).

The gripping portion 20 includes a palm portion 20A serving as a base for holding the sheets of cloth 100 and 101, and a plurality of, for example, five finger portions 22A, 22B, 22C, 22D, and 22E radially extended from the palm portion 20A. Each of the finger portions 22A, 22B, 22C, 22D, and 22E includes a plurality of joints. In the present embodiment, the five-finger structure is set to be the same (symmetrical) for both the right hand and the left hand.

For example, a palm sensor unit 26 is attached to the palm portion 20A of the gripping portion 20. The palm sensor unit 26 detects workpiece information including the shape and disposition of the sheets of cloth 100 and 101. Specifically, the palm sensor unit 26 includes a high-resolution camera that identifies the types of the sheets of cloth 100 and 101 and a MoPU (Motion Processing Unit) that specifies the positions of the sheets of cloth 100 and 101.

The high-resolution camera constituting the palm sensor unit 26 in the present embodiment identifies the aspects of the captured sheets of cloth 100 and 101 based on the captured image information.

In other words, the high-resolution camera has a role of acquiring information for specifying the shapes, the thicknesses, the positions, and the like of the sheets of cloth 100 and 101.

The MoPU constituting the palm sensor unit 26 of the present embodiment together with the high-resolution camera outputs motion information indicating the captured motion (in this case, the motion is a relative motion between the arm portions 5 and 6.) of the sheets of cloth 100 and 101 from an image of an object captured at a frame rate of 1000 frames/second or more, for example, at a frame rate of 1000 frames/second or more. The frame rate may be increased in a case in which the moving sheets of cloth 100 and 101 are detected, and the frame rate may be decreased in a case in which a fixed object (the sheets of cloth 100 and 101 that do not move) is detected.

The MoPU outputs, as the motion information, vector information of a motion along a predetermined coordinate axis of a point indicating the existence position of the object. That is, the motion information output from the MoPU does not include information necessary for identifying the aspect of the captured sheets of cloth 100 and 101, and includes only information indicating the motion (moving direction and moving speed) on coordinate axes (x-axis, y-axis, z-axis) of a predetermined position (for example, edge) of the sheets of cloth 100 and 101.

That is, it is possible to accurately guide a trajectory in a case in which the gripping portion 20 approaches the sheets of cloth 100 and 101.

The information output from the palm sensor unit 26 including the high-resolution camera and the MoPU is supplied to an information processing apparatus 14.

The information processing apparatus 14 can accurately specify the aspect of the sheets of cloth 100 and 101 based on the information from the palm sensor unit 26 including the high-resolution camera and the MoPU, calculate the degree of spread of the finger portions 22A, 22B, 22C, 22D, and 22E at the time of gripping, the strength at the time of grasping, and the like, accurately control minute motions of the arm portions 5 and 6 and the gripping portions 20, and can handle sewing work of the sheets of cloth 100 and 101.

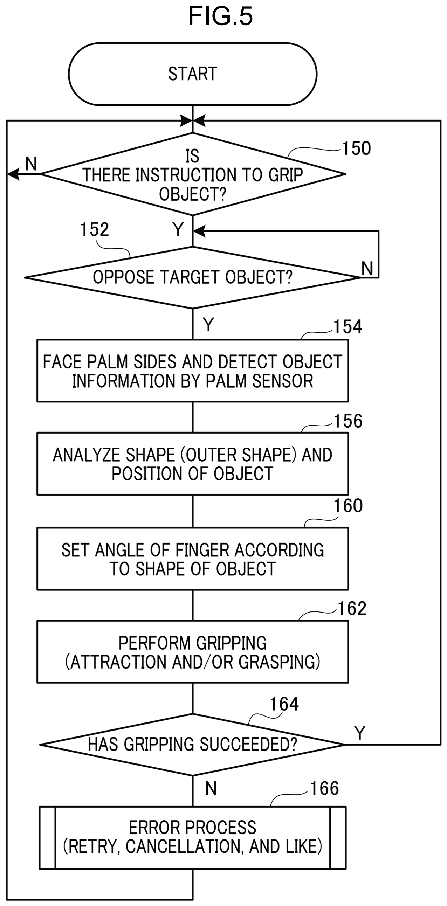

Fig. 5 is a schematic diagram illustrating an example of the control system of the humanoid robot according to the present embodiment. The control system 10 includes sensor 12 mounted on the humanoid robot, the palm sensor unit 26 including the high-resolution camera and the MoPU, and the information processing apparatus 14.

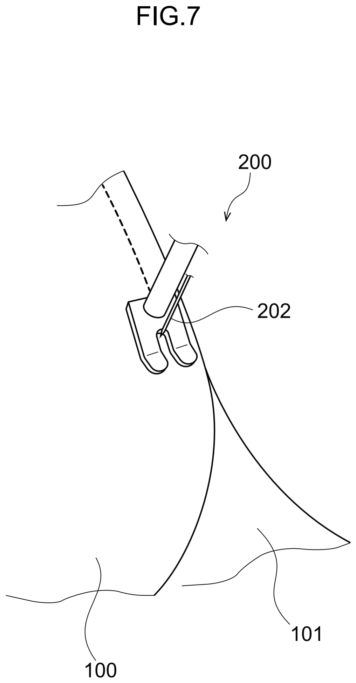

The sensor 12 sequentially acquires information representing at least a distance and an angle between the sheets of cloth 100 and 101 that are around the humanoid robot 1 and on which the humanoid robot 1 performs sewing work and the arm portions 5 and 6, and a position (Fig. 7) of a needle 202 of a sewing machine 200. As the sensor 12, a highest-performance camera, a solid-state LiDAR, a multi-color laser coaxial displacement meter, or various other sensor groups can be adopted. Other examples of the sensor 12 include a vibratory meter, a thermo camera, a hardness meter, a radar, a LiDAR, a camera with high definition, telephoto, ultra-wide angle, 360 degrees, and high performance, vision recognition, fine sound, ultrasonic wave, vibration, infrared ray, ultraviolet ray, electromagnetic wave, temperature, humidity, spot AI weather forecast, high-accuracy multi-channel GPS, low-altitude satellite information, and long tail incident AI data.

In addition to the above information, the sensor 12 detects an image, a distance, vibration, heat, odor, a color, a sound, an ultrasonic wave, an ultraviolet ray, an infrared ray, or the like. Other examples of the information detected by the sensor 12 include the movement of the center of gravity of the humanoid robot 1, the detection of a material of the floor on which the humanoid robot 1 is installed, the detection of the outside air temperature, the detection of the outside air humidity, the detection of the vertical and lateral oblique inclination angle of the floor, and the detection of the moisture content.

The sensor 12 performs these types of detection, for example, every nanosecond.

The palm sensor unit 26 (high-resolution camera and MoPU) is a sensor provided at the gripping portions 20 of the arm portions 5 and 6, and has a camera function of capturing images of the sheets of cloth 100 and 101 and a position specifying function of specifying the positions of the sheets of cloth 100 and 101 separately from the sensor 12.

In a case in which one MoPU 12 is used, vector information of the motion of the point indicating the existence position of the object along each of two coordinate axes (x-axis and y-axis) in a three-dimensional orthogonal coordinate system can be acquired. By using the principle of a stereo camera, vector information of the motion of the point indicating the existence position of the object along each of three coordinate axes (x-axis, y-axis, and z-axis) in the three-dimensional orthogonal coordinate system may be output by using two MoPUs 12. For example, the y-axis is an axis along a traveling direction of the sheets of cloth 100 and 101 in the sewing machine 200. The z-axis is an axis along a thickness direction of the sheets of cloth 100 and 101 (direction in which the needle 202 of the sewing machine 200 reciprocates). The x-axis is an axis along a direction perpendicular to the y-axis and the z-axis.

The information processing apparatus 14 includes an information acquisition unit 140, the control unit 142, and an information accumulation unit 144.

The information acquisition unit 140 acquires information of an object detected by the sensor 12 and the palm sensor unit 26 (high-resolution camera and MoPU).

The control unit 142 controls a rotation operation of a joining portion 4, a movement operation in the vertical direction, operations of the arm portions 5 and 6, and the like by using the information acquired by the information acquisition unit 140 from the sensor 12 and AI (Artificial intelligence).

The control unit 142 controls holding and an operation of the sheets of cloth 100 and 101 by the gripping portions 20 based on an operation parameter obtained by inputting a detection result of the palm sensor unit 26 into a trained model learned using learning data representing a combination of an operation of a hand of a skilled worker during work and an operation of the sewing machine 200, and executing arithmetic processing of the learning model. Specifically, the control unit 142 inputs, into the learning model, information (detection result) acquired at each time by the information acquisition unit 140 from the palm sensor unit 26 (high-resolution camera and MoPU). Examples of the operation parameter output from the learning model include the rotation angle of each joint of the five finger portions 22A, 22B, 22C, 22D, and 22E at each time, and the rotation angle of each joint of the arm portions 5 and 6 at each time. The control unit 142 holds and operates the sheets of cloth 100 and 101 by the gripping portions 20 based on these operation parameters. Parameter given to the learning model may be determined according to the aspect of the sheets of cloth 100 and 101 and the work.

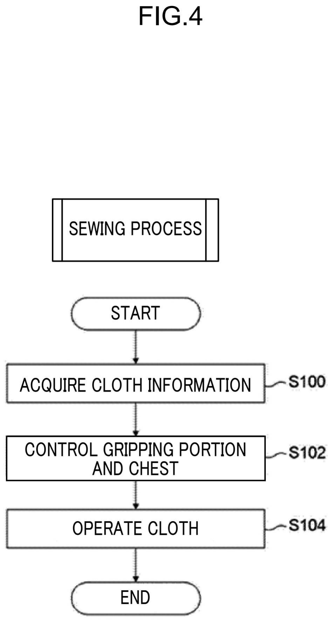

In a case of performing the sewing work, the information processing apparatus 14 repeatedly executes, for example, the flowchart illustrated in Fig. 4.

In Step S100, the information acquisition unit 140 acquires information of sheets of cloth 100 and 101 detected by the sensor 12.

In Step S102, the control unit 142 controls the arm portions 5 and 6 by using the information of the sheets of cloth 100 and 101 acquired in Step S100 and the AI, thereby grasping the sheets of cloth 100 and 101 with the gripping portions 20.

In Step S104, the control unit 142 operates the sheets of cloth 100 and 101 in accordance with the sewing work.

According to the present embodiment, the control unit 142 controls the holding and the operation of the sheets of cloth 100 and 101 by the gripping portions 20 based on the operation parameter obtained by inputting the detection result of the palm sensor unit 26 into the trained model learned using learning data representing a combination of the operation of the hand of a skilled worker during work and the operation of the sewing machine 200, and executing arithmetic processing of the learning model. As a result, during the sewing work, the operation of the sheets of cloth 100 and 101 can be performed by the gripping portions 20 like a skilled person.

The learning model may be re-learned by using a difference between a target work result and an actual work result of the humanoid robot 1. As a result, it is possible to improve the work accuracy.

### (Gripping Control of Sheets of Cloth 100 and 101 (Objects))

Fig. 5 is a flowchart illustrating a procedure of gripping control in a case in which an object is gripped by the gripping portion 20 in conjunction with the whole operation of the humanoid robot 1 in Fig. 4.

In Step 150, it is determined whether or not there is an instruction to grip an object, and in a case in which an affirmative determination is made, the process proceeds to Step 152, the arm portions 5 and 6 are operated, the palm portion 20A faces a target object, and then the process proceeds to Step 154.

In Step 154, the palm portion 20A faces the object and detects information of the object.

In the next Step 156, detection information by the palm sensor unit 26 (high-resolution camera and MoPU) is analyzed to ascertain the type (shape, size, hardness, and the like) and the position of the object in detail, and the process proceeds to Step 160.

In Step 160, angles (opening degrees) of the finger portions 22A, 22B, 22C, 22D, and 22E according to the aspect of the object are set, and the process proceeds to Step 162.

In Step 162, gripping of the object is performed.

In the next Step 164, it is determined whether or not the gripping of the object has succeeded, and in a case in which an affirmative determination is made, the gripped object is carried to a predetermined place, and then the process proceeds to Step 150 to wait for an instruction of the next object gripping.

In a case in which a negative determination is made in Step 164, the process proceeds to Step 166, an error process (for example, retry or cancellation) is executed, and the process returns to Step 150.

As described above, according to the present embodiment, the sheets of cloth 100 and 101 can be grasped by providing the three finger portions 22A, 22B, 22C, 22D, and 22E at the gripping portion 20 and bending the palm portion 20A of the gripping portion 20 and the fingers 22A, 22B, 22C, 22D, and 22E.

The palm sensor unit 26 including the high-resolution camera and the MoPU is attached to the palm portion 20A, and the gripping portions 20 having the above structure are mounted on the arm portions 5 and 6 of the humanoid robot 1, whereby the sheets of cloth 100 and 101 can be firmly gripped by the gripping portions 20 even in a case in which the humanoid robot 1 moves quickly.

Since the palm sensor unit 26 (high-resolution camera and MoPU) is mounted on the palm portion 20A, the sheets of cloth 100 and 101 can be captured with high accuracy, and it is also possible to handle work that makes minute motions. A grasping force of the gripping portion 20 can also be adjusted in accordance with the hardness or the like of the sheets of cloth 100 and 101.

### (Operation Control of Sheets of Cloth 100 and 101)

As illustrated in Fig. 7, work in which two sheets of cloth 100 and 101 are overlapped under the needle 202 of the sewing machine 200 and the sheets of cloth 100 and 101 are operated by the gripping portions 20 to align and sew the edges thereof will be described. The edge contours of the sheets of cloth 100 and 101 are different from each other in order to perform three-dimensional sewing, for example. During a feeding operation of the sewing machine 200, a strong force may act on the lower cloth 101, and thus the upper cloth 100 and the lower cloth 101 may advance differently. Thus, in a case in which sewing is performed simply by depending on the feeding operation of the sewing machine 200, the edges are shifted from each other, and it is difficult to sew the edges cleanly.

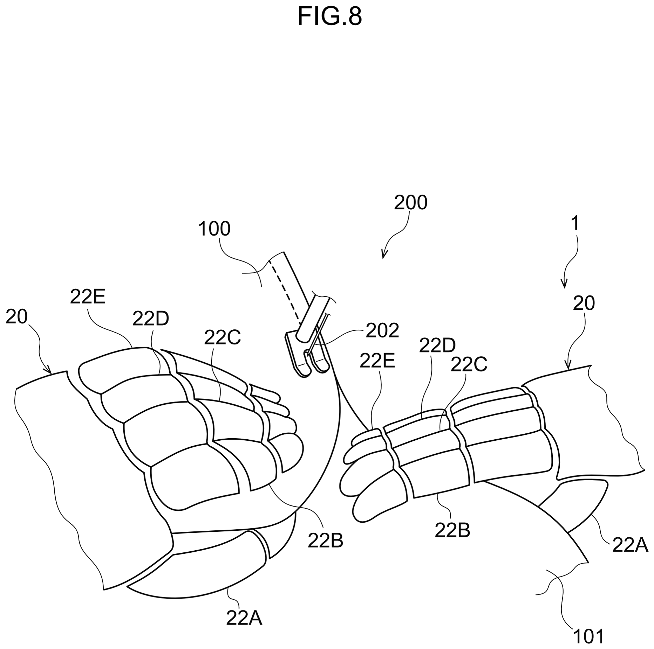

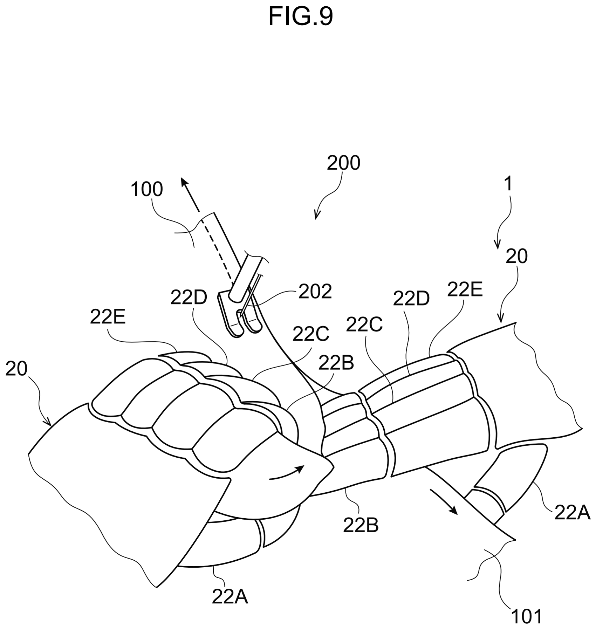

In the humanoid robot 1 according to the present embodiment, the sheets of cloth 100 and 101 are operated by the gripping portion 20 using the trained model learned using the learning data representing the combination of the operation of the hand of a sewing-skilled person and the motion of the sewing machine 200. Specifically, as illustrated in Fig. 8, the sheets of cloth 100 and 101 are gripped by the two gripping portions 20, respectively. In a case in which the sewing machine 200 is operated and the sewing proceeds to some extent, the sewing machine 200 is stopped, or the operation speed of the sewing machine 200 is reduced. Here, as illustrated in Fig. 9, the cloth 100 is pulled rightward, for example, such that the edge of the cloth 101 overlaps the edge of the cloth 100, and the cloth 101 is pulled frontward such that the difference in traveling of the sheets of cloth 100 and 101 is eliminated. In this state, the sewing machine 200 is operated again. By repeating this operation, the edges of the sheets of cloth 100 and 101 can be sewn like a skilled person.

A constant speed at which humanoid robot 1 sends the sheets of cloth 100 and 101 may be synchronized with one stroke of vertical movement of the needle 200 of the sewing machine 200. As a result, it is possible to smoothly perform the sewing.

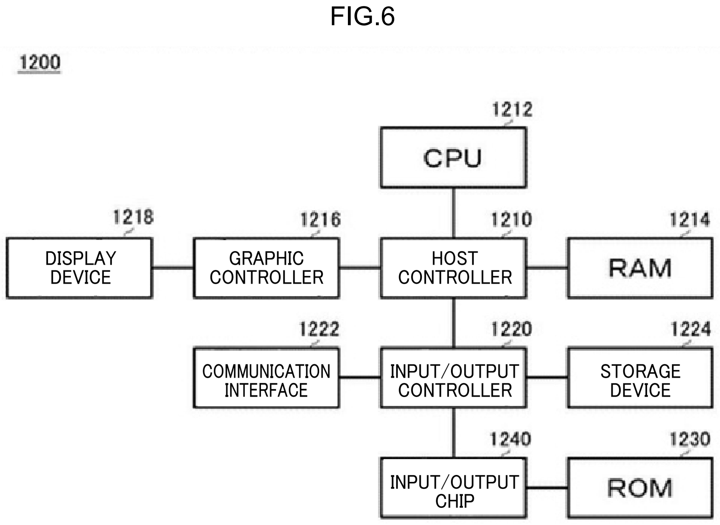

Fig. 6 schematically illustrates an example of a hardware configuration of a computer 1200 that functions as the information processing apparatus 14 including the control unit 142. A program installed on the computer 1200 can cause the computer 1200 to function as one or a plurality of "units" of the apparatus according to the present embodiment, or cause the computer 1200 to execute an operation associated with the apparatus according to the present embodiment or the one or plurality of "units" thereof, and/or cause the computer 1200 to execute a process according to the present embodiment or a stage of the process. Such a program may be executed by a CPU 1212 to cause the computer 1200 to perform specific operations associated with some or all of the blocks in the flowcharts and block diagrams described herein.

The computer 1200 according to the present embodiment includes the CPU 1212, a RAM 1214, and a graphic controller 1216, which are connected to each other by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. A storage device 1224 may be a hard disk drive, a solid state drive, or the like. The computer 1200 also includes a ROM 1230 and an input/output unit such as a keyboard, which are connected to the input/output controller 1220 via an input/output chip 1240.

The CPU 1212 operates in accordance with programs stored in the ROM 1230 and the RAM 1214, thereby controlling each unit. The graphic controller 1216 acquires image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads a program and data from an IC card and/or writes the program and data to the IC card.

The ROM 1230 stores a boot program or the like executed by the computer 1200 at the time of activation and/or a program depending on hardware of the computer 1200, in the ROM 1230. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from a computer-readable storage medium, installed in the storage device 1224, the RAM 1214, or the ROM 1230, which is also an example of a computer-readable storage medium, and executed by the CPU 1212. Information processing described in the program is read by the computer 1200 and provides cooperation between the program and various types of hardware resources. The apparatus or method may be configured by implementing an operation or processing of information in accordance with use of the computer 1200.

For example, in a case in which communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in the recording medium such as the RAM 1214, the storage device 1224, the DVD-ROM, or the IC card, transmits the read transmission data to the network, or writes reception data received from the network to a reception buffer area or the like provided on the recording medium.

The CPU 1212 may cause the RAM 1214 to read the entirety or a necessary portion of a file or database stored in an external recording medium such as the storage device 1224, the DVD drive (DVD-ROM), an IC card, or the like, and may execute various types of processing on data on the RAM 1214. The CPU 1212 may then write back the processed data to an external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information search/replacement, and the like, which are described throughout the disclosure and designated by an instruction sequence of a program, and writes back the results to the RAM 1214. The CPU 1212 may search for information in a file, a database, or the like in the recording medium. For example, in a case in which a plurality of entries each having the attribute value of the first attribute associated with the attribute value of the second attribute are stored in the recording medium, the CPU 1212 may search for an entry in which the attribute value of the first attribute coincides with the specified condition among the plurality of entries, read the attribute value of the second attribute stored in the entry, and thereby acquire the attribute value of the second attribute associated with the first attribute satisfying the predetermined condition.

The programs or software modules described above may be stored in a computer-readable storage medium on the computer 1200 or near the computer 1200. A recording medium such as a hard disk or a RAM provided in a server system connected to a dedicated communication network or the Internet can be used as the computer-readable storage medium, thereby providing a program to the computer 1200 via the network.

The blocks in the flowcharts and block diagrams in the present embodiment may represent stages of a process in which an operation is performed or "units" of an apparatus that is responsible for performing the operation. Specific stages and "units" may be implemented by a dedicated circuit, a programmable circuit provided with computer-readable instructions stored on a computer-readable storage medium, and/or a processor provided with computer-readable instructions stored on a computer-readable storage medium. The dedicated circuit may include a digital and/or analog hardware circuit, and may include an integrated circuit (IC) and/or a discrete circuit. The programmable circuit may include a reconfigurable hardware circuit such as field programmable gate arrays (FPGAs) and programmable logic arrays (PLAs), which includes, for example, logical products, disjunction, exclusive disjunction, NAND, NOR, and other logical operations, flip-flops, registers, and memory elements.

A computer-readable storage medium may include any tangible device capable of storing instructions for execution by a suitable device, and as a result, a computer-readable storage medium having instructions stored therein includes an article including instructions that may be executed to create means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray disk, a memory stick, an integrated circuit card, and the like.

The computer-readable instructions may include source code or object code written in any combination of one or more programming languages, including assembler instructions, instruction set architecture (ISA) instructions, machine instructions, machine-dependent instructions, microcode, firmware instructions, state-setting data, or an object oriented programming language such as Smalltalk (registered trademark), JAVA (registered trademark), C++, or the like, and conventional procedural programming languages, such as the "C" programming language or similar programming languages.

The computer-readable instructions may be provided for a processor of a general purpose computer, special purpose computer, or other programmable data processing device, or programmable circuit, either locally or over a wide area network (WAN), such as a local area network (LAN), the Internet, or the like, to cause the processor or programmable circuit of the general purpose computer, special purpose computer, or other programmable data processing device to execute the computer-readable instructions to generate means for the processor or programmable circuit to perform the operations specified in the flowcharts or block diagrams. Examples of the processor include a computer processor, a processing unit, a microprocessor, a digital signal processor, a controller, a microcontroller, and the like.

### (Second Embodiment)

Next, a second embodiment will be described while omitting or simplifying an overlapping portion with the above embodiment. In the second embodiment, work performed by a humanoid robot 1 is work using a workpiece including a two-dimensional code as an identification code. In the second embodiment, as an example, a case in which the humanoid robot 1 performs work of sewing sheets of cloth 100 and 101 by using a sewing machine 200 will be described.

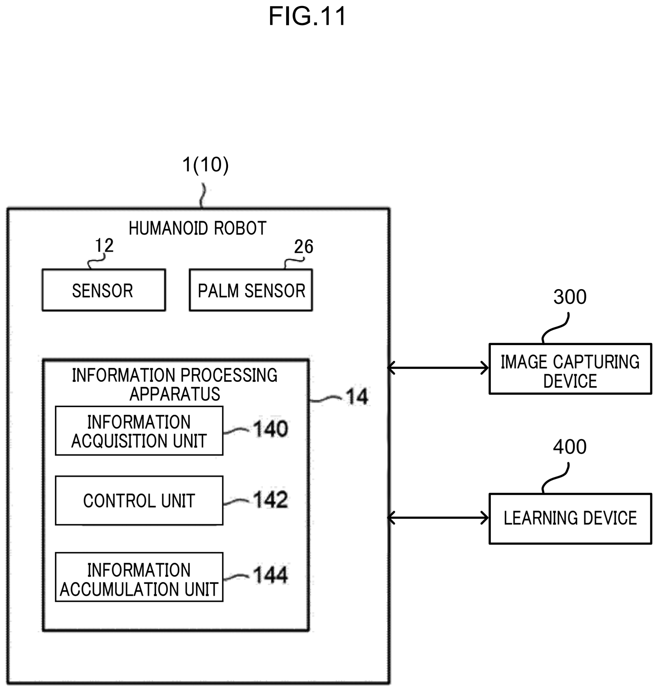

As illustrated in Fig. 11, a control system of the humanoid robot 1 according to the second embodiment includes the humanoid robot 1, an image capturing device 300, and a learning device 400. The humanoid robot 1 and the image capturing device 300, and the humanoid robot 1 and the learning device 400 are configured to communicate with each other. Although only one humanoid robot 1 is illustrated for one learning device 400 in the present embodiment, the disclosure is not limited thereto, and a plurality of humanoid robots 1 may be connected to one learning device 400.

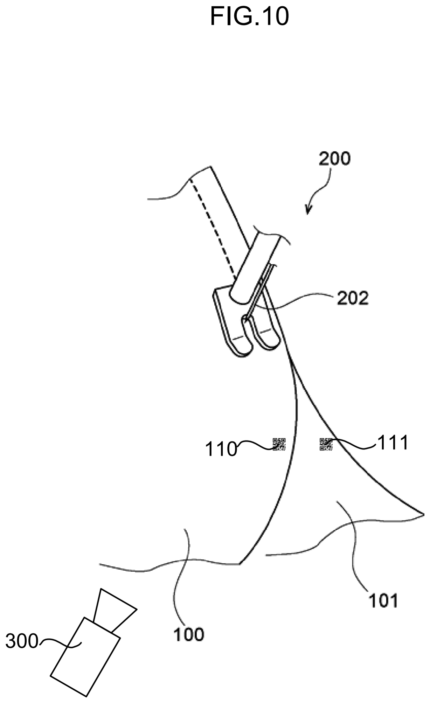

Fig. 10 is a second perspective view schematically illustrating an outline of a state in which two sheets of cloth are overlapped and set on the sewing machine according to the second embodiment.

As illustrated in Fig. 10, a two-dimensional code 110 is printed on the cloth 100 in the present embodiment, and a two-dimensional code 111 is printed on the cloth 101. The image capturing device 300 is provided separately from the humanoid robot 1 and the sewing machine 200.

The two-dimensional codes 110 and 111 are printed at specific positions of the workpiece. The specific position is a position detectable by a sensor 12, a palm sensor unit 26, or the image capturing device 300 during the work of the humanoid robot 1. In the present embodiment, as an example, the two-dimensional code 110 is printed in the vicinity of the edge of the back surface of the cloth 100, and the two-dimensional code 111 is printed in the vicinity of the edge of the front surface of the cloth 101. Here, the two-dimensional codes 110 and 111 are printed as a set of corresponding two-dimensional codes.

The two-dimensional codes 110 and 111 are configured such that character information can be read. The character information includes at least one of the type of the workpiece, the step order, or position information on the workpiece. Each piece of information in the present embodiment is, for example, information indicating the type of part of cloth, the sewing order, and the coordinate position in the part. Examples of the two-dimensional code include a bar code and a QR code (registered trademark). The step order may be the order in all steps or the order in the step in one workpiece, or may include both the orders.

Information included in the two-dimensional code 110 is, for example, "part of sleeve, No. 7, x: 10, y: 70, back surface". Here, the part of the sleeve corresponds to "type of cloth part", No. 7 corresponds to "sewing order", and "x: 10, y: 70" corresponds to "coordinate position in part". Information included in the two-dimensional code 111 is, for example, "part of sleeve, No. 7, x: -10, y: 70, front surface".

The image capturing device 300 captures an image of a situation in which the humanoid robot 1 performs work and a workpiece. In the present embodiment, the image capturing device 300 performs image capturing from the lower direction of a sewing machine table on which the sewing machine 200 on which the sheets of cloth 100 and 101 are set is installed. The image capturing device 300 in the present embodiment captures an image of a region that cannot be detected by the palm sensor unit 26 of the humanoid robot 1. Image capturing from the lower direction of the sewing machine table is to capture an image of the lower surfaces of the sheets of cloth 100 and 101 facing the upper surface of the sewing machine table as an example of a blind spot region. The sewing machine table in the present embodiment may be transparent or meshed such that the image capturing device 300 can perform image capturing from the lower direction of the sewing machine table. Similarly to the palm sensor unit 26, the image capturing device 300 desirably includes a high-resolution camera and a MoPU.

Fig. 11 is a diagram schematically illustrating an example of a functional configuration of the humanoid robot and a peripheral device thereof according to the second embodiment.

As illustrated in Fig. 11, an information processing apparatus 14 in the second embodiment includes an information acquisition unit 140, a control unit 142, and an information accumulation unit 144 as the functional configuration, similarly to the first embodiment. Unique operations of the information acquisition unit 140 and the control unit 142 in the second embodiment, and the learning device 400 as an example of the peripheral device will be described below.

The information acquisition unit 140 has a function of acquiring information of an object detected by the sensor 12, the palm sensor unit 26, and the image capturing device 300. The information of the object, that is, information of cloth in the present embodiment includes the printed position and inclination of the two-dimensional codes 110 and 111, and character information that can be read from the two-dimensional codes 110 and 111.

The control unit 142 has a function of controlling holding and an operation of the sheets of cloth 100 and 101 by gripping portions 20 based on the information of the cloth acquired by the information acquisition unit 140. The control unit in the present embodiment inputs not only the shape and the disposition of the sheets of cloth 100 and 101, which are detected by the palm sensor unit 26, but also information of the sheets of cloth 100 and 101 detected by the palm sensor unit 26 and the image capturing device 300 into a learning model, and controls the gripping portion 20 by using the output operation parameter. As a result, the information processing apparatus 14 controls the holding and the operation of the sheets of cloth 100 and 101.

The learning device 400 has a function of learning a learning model used by the control unit 142. The learning device 400 in the present embodiment is a device that re-learns a trained model. The learning device 400 acquires the operation parameter output from one or a plurality of information processing apparatuses 14 during work and difference data representing a difference between a target work result and an actual work result, and re-learns the learning model already used in the control unit 142. The difference data in the present embodiment will be described in a difference data output process which will be described later.

A computer functioning as the learning device 400 in the present embodiment has a configuration similar to that of the computer 1200 in Fig. 6. The learning device 400 re-learns the trained model by a program installed on the learning device 400. Re-learning will be described in a re-learning process which will be described later.

### (Actions)

Similarly to the above embodiment, the information processing apparatus 14 in the second embodiment repeatedly executes the flowchart illustrated in Fig. 4 as an example, in a case of performing sewing work. A unique operation in the second embodiment in a case in which the information processing apparatus 14 performs sewing work will be described below with reference to Fig. 4.

In Step S100 of Fig. 4, the information acquisition unit 140 acquires information of the sheets of cloth 100 and 101 detected by the sensor 12, the palm sensor unit 26, and the image capturing device 300.

In Step S102, the control unit 142 controls the arm portions 5 and 6 by using the information of the sheets of cloth 100 and 101 acquired in Step S100 and the AI, thereby grasping the sheets of cloth 100 and 101 with the gripping portions 20. The AI in the present embodiment is AI uses a trained model re-learned by the re-learning process which will be described later.

In Step S104, the control unit 142 operates the sheets of cloth 100 and 101 in accordance with the sewing work based on the information acquired by the information acquisition unit 140. As an example, the control unit 142 sews the sheets of cloth 100 and 101 such that the position of the two-dimensional code 110 and the position of the two-dimensional code 111 overlap each other.

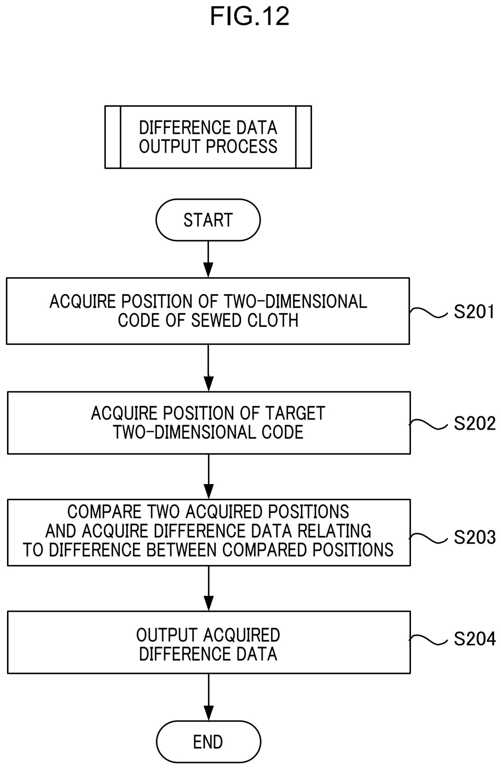

Fig. 12 is a flowchart illustrating a flow of a difference data output process of outputting a difference in the position of the two-dimensional code according to the second embodiment. The difference data output process is a process for outputting data for re-learning the trained model.

In Step S201 of Fig. 12, a CPU 1212 acquires the position of the two-dimensional code of the sewn cloth. Specifically, the information acquisition unit 140 acquires the information of the cloth, thereby acquiring the position of the two-dimensional code. In the second embodiment, as an example, the positions of the two-dimensional codes 110 and 111 are acquired after the sheets of cloth 100 and 101 are sewn.

In Step S202, the CPU 1212 acquires the target positions of the two-dimensional codes 110 and 111. The target position of the two-dimensional code in the present embodiment is a predetermined position set by a user. Information of this position may be included in character information that can be read from the two-dimensional code.

In Step S203, the CPU 1212 compares the two acquired positions and acquires difference data related to a difference between the compared positions. The difference data is, for example, data representing a difference in interval and a difference in inclination between the acquired two-dimensional code and a target two-dimensional code. The data may be a numerical value or image information.

In Step S204, the CPU 1212 outputs the acquired difference data. As an example, the CPU 1212 outputs the difference to the learning device 400. The CPU 1212 ends the difference data output process.

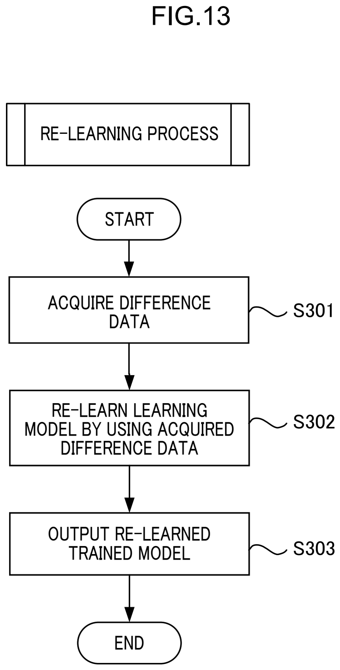

Fig. 13 is a flowchart illustrating a flow of a re-learning process in which the learning device 400 re-learns the learning model according to the second embodiment.

In Step S301 of Fig. 13, the learning device 400 acquires the difference data. The difference data in the present embodiment is the difference data output in Step S204 in Fig. 12.

In Step S302 of Fig. 13, the learning device 400 re-learns the learning model by using the acquired difference data. The method of re-learning the learning model is, for example, reinforcement learning in which a reward is set in accordance with a difference represented by the acquired difference data. As an example, the reward is set such that the reward increases as the difference decreases.

In Step S303, the learning device 400 outputs the re-learned trained model. The learning device 400 outputs the learning model to the information processing apparatus 14 that has acquired the difference data in Step S301. The learning device 400 ends the re-learning process.

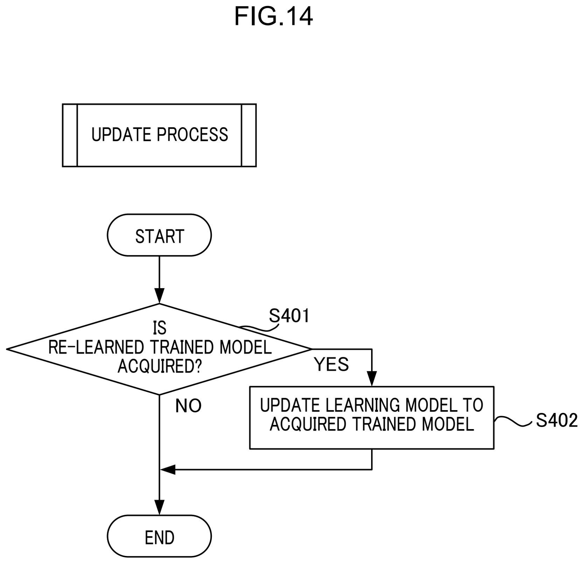

Fig. 14 is a flowchart illustrating a flow of an update process for an information processing apparatus 14 to acquire the operation parameter according to the second embodiment.

In Step S401 of Fig. 14, the CPU 1212 determines whether or not the re-learned trained model has been acquired. In a case of determining that the re-learned trained model has been acquired (Step S401: YES), the CPU 1212 proceeds to Step S402. In a case of determining that the re-trained model has not been acquired (Step S401: NO), the CPU 1212 ends the update process.

In Step S402, the CPU 1212 updates the learning model to the acquired trained model. In the present embodiment, the acquired trained model is the learning model output in Step S303 of Fig. 13. The CPU 1212 ends the update process. The CPU 1212 may proceed to Step S100 illustrated in Fig. 4 after ending the update process.

### (Summary of Second Embodiment)

Since the two-dimensional codes 110 and 111 are printed at specific positions of the workpiece, the information acquisition unit 140 can acquire specific positions of the sheets of cloth 100 and 101. Since the information processing apparatus 14 can operate the gripping portion 20 based on the specific positions, it is possible to improve the accuracy of operating the gripping portion 20.

Since the two-dimensional codes 110 and 111 are printed in the vicinity of the edge of the sheets of cloth, it is possible to secure a long time until the two-dimensional code 111 is covered by the cloth 100 at the time of sewing the sheets of cloth 100 and 101, as compared with a case in which printing is performed in a portion other than the vicinity of the edge of the sheets of cloth. Since the two-dimensional codes 110 and 111 are printed on places that are not visible to a person at the time of wearing, it is possible to reduce the influence of the printed two-dimensional code on the design of the clothing.

The information processing apparatus 14 outputs the difference between the positions of the two-dimensional codes to the learning device 400. The learning device 400 re-learns the learning model by using data of the output difference and outputs the re-trained model to the information processing apparatus 14. The information processing apparatus 14 can improve the accuracy of controlling each unit of the humanoid robot 1 by using the operation parameter obtained by inputting the detection result of the palm sensor unit 26 into the re-learned trained model.

The learning device 400 re-learns the trained model based on the operation parameter and the difference data (defined as data for learning below) acquired from one information processing apparatus 14. As a result, it is possible to correct an error caused by the individual difference between the sewing machine 200 and/or the humanoid robot 1, and the aging.

The learning device 400 may re-learn the trained model by using the data for learning acquired from the information processing apparatus 14 included in a plurality of humanoid robots 1 of the same model that perform the same work. In this case, as compared with a case in which the data for learning is acquired from one information processing apparatus 14, it is possible to acquire more pieces of learning data in a predetermined period and re-learn the learning model. It is possible to efficiently improve the trained model in accuracy and robustness of the learned model because the trained model can efficiently be re-learned from many pieces of learning data including the noise due to the error caused by the individual difference between the sewing machine 200 and/or the humanoid robot 1 and the aging.

In a case in which the identification information of the workpiece is included in the information of the detected two-dimensional codes 110 and 111, the information processing apparatus 14 can determine whether the combination of the workpieces is correct or incorrect. Thus, it is possible to prevent a situation in which the combination of the workpieces is wrong. This situation is, for example, a situation in which sheets of cloth of different parts are sewn together.

In a case in which the work order is included in the information of the detected two-dimensional codes 110 and 111, the information processing apparatus 14 can reduce a situation in which the work step is skipped. In particular, even in a case in which the learning model is re-learned, the work can be performed along the work order, and thus it is possible to prevent the work order from being changed or prevent the work step from being skipped.

In a case in which the information of the two-dimensional codes 110 and 111 includes the position information in the workpiece, the information processing apparatus 14 can detect a deviation between this position information and actual position information of the two-dimensional code during work. Therefore, the information processing apparatus 14 can improve the perfection of the workpiece by performing the work while correcting the deviation.

The information processing apparatus 14 can acquire image information of a workpiece that cannot be detected by the sensor 12 and the palm sensor unit 26, by acquiring image information of the workpiece captured by the image capturing device 300 that captures an image from a blind spot side of the sensor 12 or the palm sensor unit 26. The image information is, for example, information of overlapping of the sheets of cloth 100 and 101 captured from the lower direction of the sewing machine table, information of a two-dimensional code that can be detected only from the lower direction of the sewing machine table, or the like. By acquiring the image information, the humanoid robot 1 can perform the work more accurately than a case in which this image information is not provided.

### [Remarks]

In the second embodiment, one set of two-dimensional codes is printed on the sheets of cloth 100 and 101 as the workpiece, but the object to be printed is not limited to the two-dimensional code. The object to be printed may be, for example, a mark (pattern) such as a dot or a cross, or may be an object from which character information cannot be read. The number of sets to be printed is not limited to one, and two or more sets may be printed. The two-dimensional codes do not need to be printed in pairs, and may be printed independently. The surface on which the two-dimensional code is printed may be either the front surface or the back surface of the sheets of cloth 100 and 101, or may be printed on both surfaces.

In the second embodiment, the two-dimensional code is printed in the vicinity of the edge of the cloth, but the place where the two-dimensional code is printed is not limited thereto. The two-dimensional code may be printed anywhere as long as the two-dimensional code can be printed on the workpiece. As an example, the two-dimensional code is printed at a characteristic place such as a place where a tag is attached, a place where a sewing angle changes suddenly, and a place where stitches intersect.

In the second embodiment, the image capturing device 300 is provided separately from the humanoid robot 1 and the sewing machine 200. However, the data captured by image capturing device 300 only needs to be acquired by the information processing apparatus 14 of the humanoid robot 1, and the image capturing device 300 may be integrated with the humanoid robot 1 or the sewing machine 200 (including the sewing machine table).

Although the re-learning of the trained model in the second embodiment is executed by the learning device 400, the execution of the re-learning is not limited thereto. The re-learning may be executed by the information processing apparatus 14, a system including a plurality of apparatuses, or the like.

In the second embodiment, since the learning device 400 has the similar configuration to the computer 1200, the learning device 400 has a configuration corresponding to the CPU 1212 and the graphic controller 1216, but instead of or in addition to these components, a processor suitable for generation or re-learning of the learning model may be provided. The processor is, for example, an AI chip.

In the second embodiment, reinforcement learning has been described as an example of the re-learning method of the learning model using the output difference, but the reinforcement learning here includes deep reinforcement learning combining deep learning and reinforcement learning. The learning method of re-learning of the learning model is not limited to reinforcement learning, and may be supervised learning, unsupervised learning, deep learning without combining reinforcement learning, or the like.

In a case in which the data for learning is acquired from a plurality of information processing apparatuses 14 and the learning model is learned or re-learned, the reinforcement learning may be a "group reinforcement learning method" (https://www.jstage.jst.go.jp/article/sicejl/52/6/52_540/_pdf), a "multi-agent reinforcement learning system that shares a learning experience in which a search agent is introduced" (https://www.jstage.jst.go.jp/article/kikaic1979/74/739/74_739_692/_pdf), or the like, which is a known learning method. The re-learning of the learning model may be performed by offline reinforcement learning after acquisition and accumulation of the data for learning from a plurality of information processing apparatuses 14.

The operation of the processor in the above-described embodiment may be performed not only by one processor but also by a plurality of processors in cooperation, or may be performed by a plurality of processors existing at physically separated positions in cooperation.

### (Third Embodiment)

Next, a third embodiment will be described while omitting or simplifying an overlapping portion with the above embodiment. The third embodiment is characterized in that an operation (defined as a specific operation below) performed by a skilled worker using specific sewing equipment is converted into an operation performed by a humanoid robot 1 using a robot tool. In the third embodiment, a case in which a learning device 400 as an information processing apparatus converts learning data will be described.

Specifically, sewing equipment as a machine is an iron, a cutting scissors, tweezers, a thread cutting scissors, or the like. The specific sewing equipment as a specific machine is sewing equipment that can be replaced by a robot tool included in the humanoid robot 1 among the above-described types of sewing equipment.

The specific operation as specific work is an operation performed by a skilled worker using the specific sewing equipment.

### (Overall Configuration)

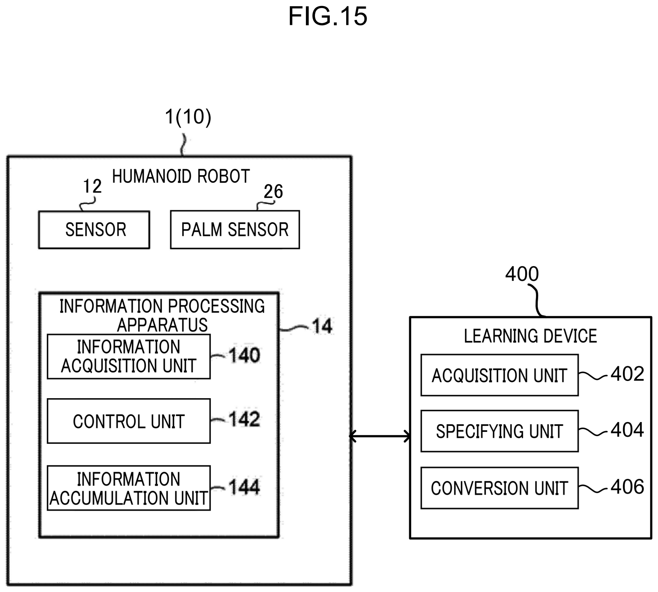

Fig. 15 is a diagram schematically illustrating an example of functions of a control system that controls the humanoid robot 1 and each device according to the third embodiment. As illustrated in Fig. 15, the humanoid robot 1 and the learning device 400 are communicatively connected to each other.

First, the humanoid robot 1 according to the third embodiment will be described. As illustrated in Fig. 1, the humanoid robot 1 includes a gripping portion 20. A configuration of the gripping portion 20 unique to the third embodiment will be described below.

### (Gripping Portion 20)

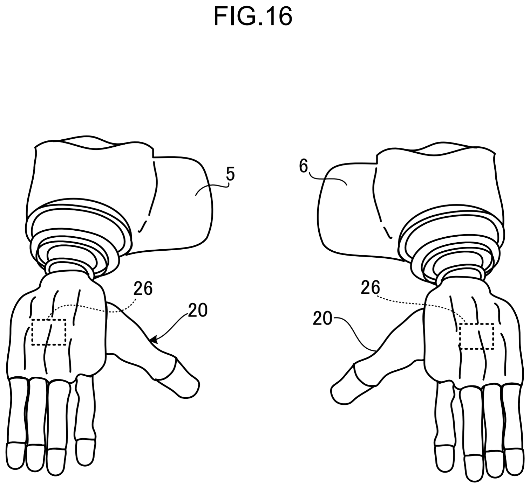

Fig. 16 is a view illustrating an outline of the gripping portion 20 replaceable with a robot tool 21EX.

As illustrated in Fig. 16, the gripping portion 20 is a portion beyond the wrist joined to the arm portions 5 and 6, and the gripping portion 20 is attachably detachable at this wrist portion and can be replaced with the robot tool 21EX which will be described later.

### (Robot Tool 21EX)

In the first embodiment, the main purpose is to grip the sheets of cloth 100 and 101 by using the gripping portion 20, as the operation on the sheets of cloth 100 and 101.

There is a case in which the operation on the sheets of cloth 100 and 101 is not gripping but another operation (for example, cutting, ironing, and the like).

In this case, the sewing equipment corresponding to various operations can be gripped by the gripping portion 20 to oppose sheets of cloth 100 and 101, but in a case in which the same operation is continuously executed, the burden of control of maintaining the gripping state (relative position control between the gripping portion and the gripped sewing equipment, and the like) is large.

Thus, in a case in which sewing equipment is the specific sewing equipment, the gripping portion 20 is replaced with the robot tool 21EX, and thus a configuration in which an operation of the humanoid robot 1 according to the specific operation is executed is made.

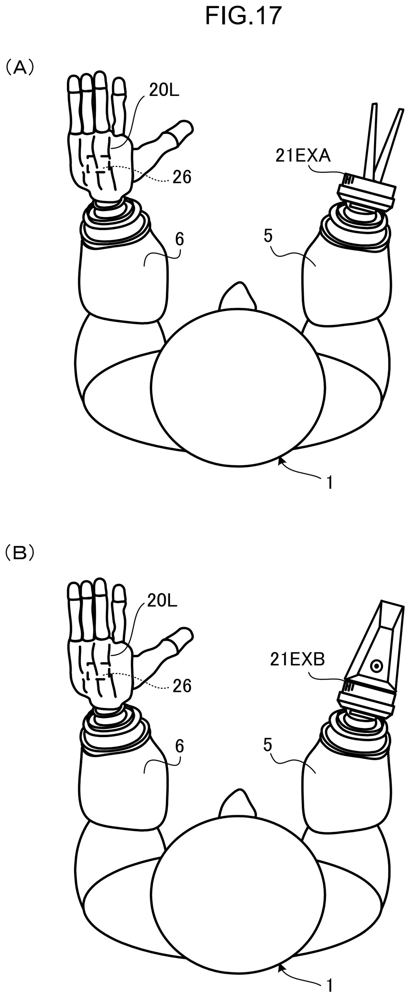

Figs. 17(A) and 17(B) are views illustrating an example of a state in which the gripping portion 20 is replaced with the robot tool 21EX.

As illustrated in Fig. 17(A), an operation of a robot tool 21EXA is cutting, and cutting scissors are attached as a tool.

As illustrated in Fig. 17(B), an operation of a robot tool 21EXB is ironing, and an iron is attached as the tool.

Although not illustrated, the sensor unit 26 is also attached to each robot tool 21EX.

### (Replacement of Tip of Finger)

The tip of the finger of the gripping portion 20 can be changed to a robot tool corresponding to the specific sewing equipment like the robot tool 21EX described above.

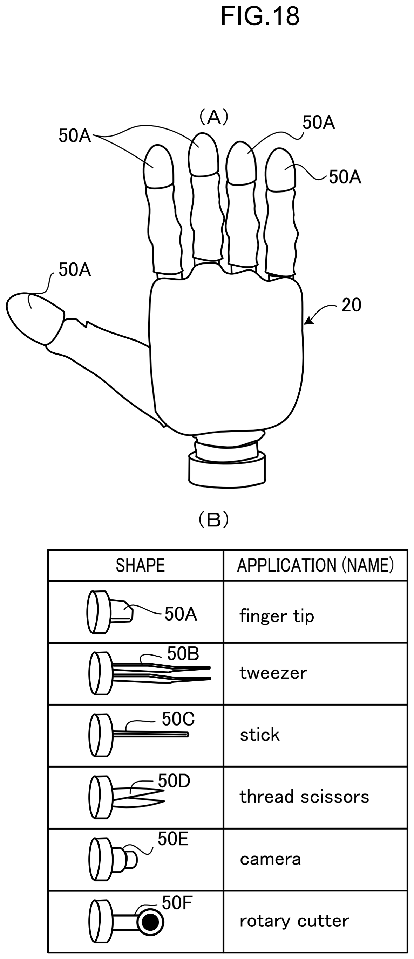

As illustrated in Fig. 18(A), the gripping portion 20 according to the third embodiment is set to basically have the main purpose of gripping the sheets of cloth 100 and 101.

In the gripping portion 20 in the present embodiment, the tip of each finger is attachably detachable. In the state of Fig. 18(A), a robot tool 50A ("finger tip" illustrated in Fig. 18(B)) for the main purpose is attached.

As illustrated in Fig. 18(B), tips of the respective finger portions can be replaced with robot tools 50B to 50F having a function corresponding to the specific sewing equipment.

The robot tool 50B is "tweezer", which is a so-called tweezer, and is applied in a case in which a small member such as a brand tag is sandwiched or pressed.

The robot tool 50C is "stick" and is applied in a case in which cloth is pressed with a rod-shaped member or glue is applied onto the cloth.

The robot tool 50D is "thread scissors", which is so-called thread cutting scissors, and is applied in a case in which thread is cut.

The robot tool 50E is "camera" and is applied in a case in which an image of cloth is captured (particularly, close-up).

The robot tool 50F is "rotary cutter", which is a so-called rotary cutter, and is applied in a case in which cloth is cut out.

These robot tools are particularly suitable for working on fine parts.

### (Learning Device 400)

Next, the learning device 400 according to the third embodiment will be described. A computer functioning as the learning device 400 in the present embodiment has a configuration similar to that of the computer 1200 in Fig. 6. The learning device 400 has a function of learning a learning model used in a control unit 142 of the humanoid robot 1 by a program installed on the learning device 400.

As illustrated in Fig. 15, the learning device 400 in the present embodiment functions as an acquisition unit 402, a specifying unit 404, and a conversion unit 406.

The acquisition unit 402 has a function of acquiring learning data.

The learning data in the present embodiment is learning data representing a combination of an operation of a skilled worker during sewing and an operation of sewing equipment used by the skilled worker. The learning data in the present embodiment includes analysis data obtained in a manner that a work video obtained by capturing an image of a situation in which a skilled worker is performing work is analyzed by image recognition. As an example, the acquisition unit 402 acquires data of a motion of the skeleton of the entire body including the fingers, the hands, and the arms of the skilled worker, which is estimated from the work video, and a motion of the sewing equipment.

The acquisition unit 402 acquires information of a label indicating the type of the sewing equipment, which is estimated from the work video. The acquisition unit 402 may acquire information output by motion capture in addition to the information obtained from the work video.

The specifying unit 404 has a function of specifying learning data representing a specific operation as first learning data from among the acquired pieces of learning data. The specifying unit 404 in the present embodiment specifies, as the learning data representing the specific operation, data representing an operation in which the skilled worker uses the specific sewing equipment in the analysis data of the work video. As an example, the specifying unit 404 specifies, as the learning data representing the specific operation, learning data in a case in which information of the label of the sewing equipment used by the skilled worker represents the type of the specific sewing equipment.

The conversion unit 406 has a function of converting learning data. The conversion unit 406 converts the specified learning data into learning data representing an operation of the humanoid robot 1 corresponding to the specific operation as the second learning data. The conversion unit 406 in the present embodiment converts the learning data with reference to a conversion table 410 which is stored in a storage device of the learning device 400 and will be described later.

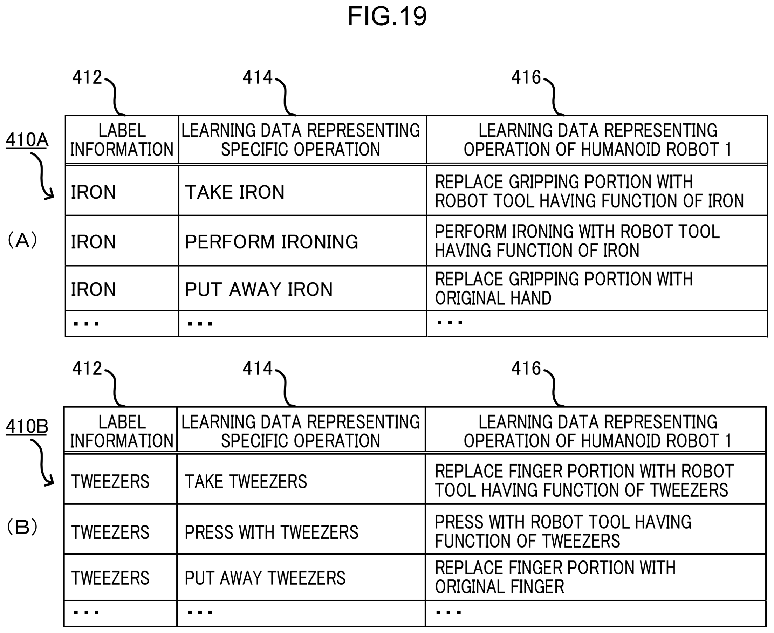

Figs. 19(A) and 19(B) are diagrams schematically illustrating examples of a data structure of the conversion table 410 that stores the learning data representing the specific operation of the skilled worker and the learning data representing the corresponding operation of the humanoid robot 1.

As illustrated in Figs. 19(A) and 19(B), the conversion table 410 in the present embodiment is prepared for each type of specific sewing equipment. The conversion table 410 includes, for example, a conversion table 410A for an iron and a conversion table 410B for tweezers.

In each conversion table 410, one record is registered for each piece of learning data representing the specific operation as a conversion target. Each record is configured to include a field 412 in which "label information" representing the type of the specific sewing equipment is registered, a field 414 in which "learning data representing the specific operation" is registered, and a field 416 in which "learning data representing the operation of the humanoid robot 1" is registered.

In the present embodiment, learning data acquired for each operation of the humanoid robot 1 corresponding to the specific operation is stored in "learning data representing the operation of the humanoid robot 1". As an example, the learning data is data obtained from a video obtained by capturing an image of a situation in which the humanoid robot 1 replaces the gripping portion 20 with the robot tool 21EXB. The data is data representing the combination of the motions of the gripping portion 20 and the skeleton of the arm portions 5 and 6 of the humanoid robot 1 and the motion of the robot tool 21EXB, which are estimated from the video.

As illustrated in Fig. 19(A), in the first row of the conversion table 410A, as an example, label information of "iron" is registered in the field 412, learning data in a case in which a skilled worker "takes an iron" is registered in the field 414, and learning data in a case for the humanoid robot 1 to "replace the gripping portion with a robot tool having a function of an iron" is registered in the field 416. This means that the learning data in a case in which the skilled worker takes the iron is converted into the learning data representing the corresponding operation of the humanoid robot 1.

In the second row of the conversion table 410A, as an example, the label information of "iron" is registered in the field 412, learning data in a case in which the skilled worker "performs ironing" is registered in the field 414, and learning data for the humanoid robot 1 to "perform ironing with a robot tool having a function of an iron" is registered in the field 416.

In the third row of the conversion table 410A, as an example, the label information of "iron" is registered in the field 412, learning data in a case in which the skilled worker "puts away the iron" is registered in the field 414, and learning data for the humanoid robot 1 to "replace the gripping portion with the original hand" is registered in the field 416.

As illustrated in Fig. 19(B), in the first row of another conversion table 410B, as an example, label information of "tweezers" is registered in the field 412, learning data in a case in which a skilled worker "takes tweezers" is registered in the field 414, and learning data for the humanoid robot 1 to "replace a finger portion with a robot tool having a function of tweezers" is registered in the field 416.

In the second row of the conversion table 410B, as an example, the label information of "tweezers" is registered in the field 412, learning data in a case in which the skilled worker "presses with tweezers" is registered in the field 414, and learning data for the humanoid robot 1 to "press with a robot tool having a function of tweezers" is registered in the field 416.

In the third row of the conversion table 410B, as an example, the label information of "tweezers" is registered in the field 412, learning data in a case in which the skilled worker "puts away the tweezers" is registered in the field 414, and learning data for the humanoid robot 1 to "replace the finger portion with the original finger" is registered in the field 416.

The conversion unit 406 illustrated in Fig. 15 has a function of adjusting a parameter such that the operation of the specific sewing equipment becomes the operation of the corresponding robot tool in a case of converting the learning data with reference to the conversion table 410. As an example, in a case of converting the learning data representing the operation in which the skilled worker performs ironing, the conversion unit 406 in the present embodiment converts the parameter of coordinate data such that the coordinate data of the robot tool 21EXB used by the humanoid robot 1 coincides with coordinate data of the iron.

The conversion unit 406 has a function of changing the label of the learning data. Specifically, the conversion unit 406 labels, again, the learning data labeled as the motion of the specific sewing equipment as the motion of the robot tool. As an example, the conversion unit 406 converts the label of the learning data labeled as "iron" into the label of "robot tool 21EXB".

### (Actions)

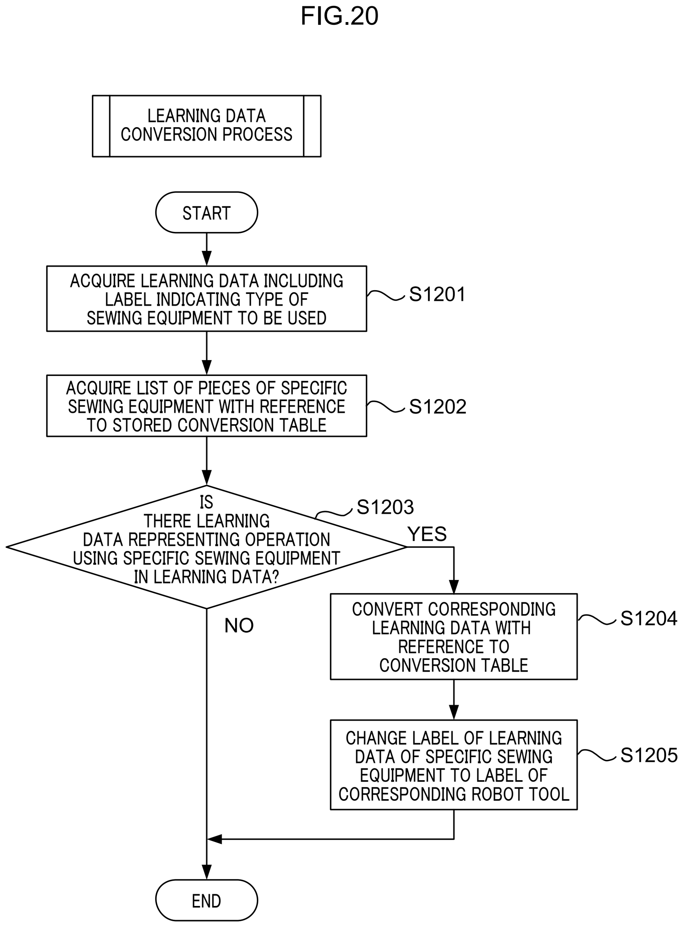

Fig. 20 is a flowchart illustrating a flow of a learning data conversion process that is a process of converting learning data according to the third embodiment.

In Step S1201 of Fig. 20, the learning device 400 acquires learning data including a label indicating the type of sewing equipment to be used. The learning device 400 acquires, for example, learning data representing a combination of the operation of a skilled worker during work using an iron and the operation of the iron. The learning data includes the label information of "iron".

In Step S1202, the learning device 400 refers to the stored conversion table 410 and acquires a list of pieces of specific sewing equipment. For example, the learning device 400 acquires information of an iron and tweezers, and the like as a list of pieces of specific sewing equipment from the label information of the conversion table.

In Step S1203, the learning device 400 determines whether or not learning data representing an operation using the specific sewing equipment exists in the learning data. In a case of determining that the learning data exists (Step S1203: YES), the learning device 400 proceeds to Step S1204. In a case of determining that the learning data does not exist (Step S1203: NO), the learning device 400 ends the learning data conversion process.

In Step S1204, the learning device 400 refers to the conversion table 410 and converts the corresponding learning data. Specifically, the learning device 400 reads the conversion table 410 for each piece of label information from the storage device, refers to the read conversion table 410, and converts the learning data representing the specific operation into the learning data representing the operation of the humanoid robot 1.

In Step S1205, the learning device 400 changes the label of the learning data of the specific sewing equipment to the label of the corresponding robot tool. Then, the learning device 400 ends the learning data conversion process.

### (Summary of Third Embodiment)

The learning device 400 in the present embodiment converts the learning data representing the specific operation into the learning data of the motion using the robot tool by the humanoid robot 1. Therefore, the learning device 400 in the present embodiment can use the learning data representing the motion that causes the humanoid robot 1 to use the robot tool in a case of learning the learning model. That is, by converting the learning data in the present embodiment, the learning device 400 can perform pre-processing of the learning data such that the learning data represents the unique operation of the humanoid robot 1 that is not performed by the skilled worker.

The learning device 400 in the present embodiment converts the learning data of the specific operation of the skilled worker into the learning data representing the operation of the humanoid robot 1 acquired in advance, by using the conversion table 410. Therefore, the learning device 400 in the present embodiment can convert the learning data even though the specific operation is completely different from the corresponding motion of the humanoid robot 1.

The learning device 400 in the present embodiment converts the learning data by changing the label indicating the specific sewing equipment to the label indicating the corresponding robot tool. Therefore, the learning device 400 in the present embodiment can set the learning data representing the motion of the specific sewing equipment as the learning data representing the motion of the corresponding robot tool. That is, the learning device 400 in the present embodiment can learn the learning model by regarding the learning data of the motion of the specific sewing equipment as the learning data of the motion of the robot tool.

### (Fourth Embodiment)

Next, a fourth embodiment will be described while omitting or simplifying an overlapping portion with the embodiments described above. The learning data is converted in the third embodiment, but, in the fourth embodiment, an operation parameter output from a trained model is converted. In the fourth embodiment, a case in which an information processing apparatus 14 as an information processing apparatus converts an operation parameter will be described.

### (Overall Configuration)

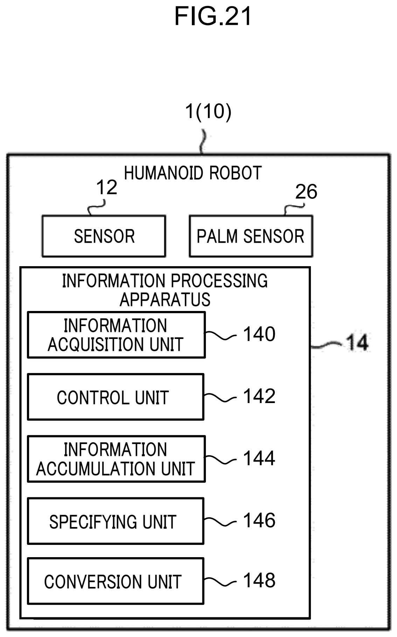

Fig. 21 is a diagram schematically illustrating an example of a functional configuration of a humanoid robot according to the fourth embodiment.

As illustrated in Fig. 21, the information processing apparatus 14 in the fourth embodiment includes a specifying unit 146 and a conversion unit 148 in addition to the functional configuration of the above-described embodiments. The specifying unit 146 and the conversion unit 148 will be described below.

The specifying unit 146 has a function of specifying an operation parameter (defined as a specific operation parameter below) representing an operation in which the humanoid robot 1 uses specific sewing equipment as a first operation parameter. In the present embodiment, the specifying unit 146 specifies the specific operation parameter from operation parameters output from the trained model. As an example, the specifying unit 146 specifies the motions of a gripping portion 20 and arm portions 5 and 6 that takes an iron.

The conversion unit 148 has a function of converting the operation parameter. The conversion unit 148 converts the specific operation parameter into an operation parameter (defined as a conversion operation parameter below) representing an operation in which the humanoid robot 1 uses a robot tool as a second operation parameter. The conversion unit 148 in the present embodiment converts the operation parameter with reference to a conversion table 510 stored in a storage device 1224.

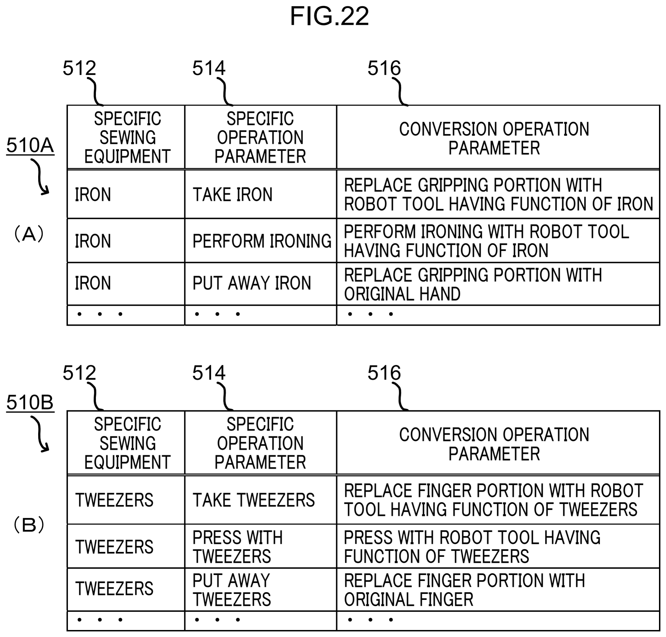

Figs. 22(A) and 22(B) are diagrams schematically illustrating an example of a data structure of the conversion table 510 that stores the specific operation parameter and the conversion operation parameter in association with each other.

As illustrated in Figs. 22(A) and 22(B), the conversion table 510 in the present embodiment is prepared for each type of specific sewing equipment. The conversion table 510 includes, for example, a conversion table 510A for an iron and a conversion table 510B for tweezers.

In each conversion table 510, one record is registered for each specific operation parameter as a conversion target. Each record is configured to include a field 512 in which "specific sewing equipment" is registered, a field 514 in which "specific operation parameter" is registered, and a field 516 in which "conversion operation parameter" is registered.

In the present embodiment, in "conversion operation parameter", the operation parameter of the humanoid robot 1 corresponding to the specific operation parameter is stored. As an example, the conversion operation parameter is an operation parameter representing an operation in which the humanoid robot 1 replaces the gripping portion 20 with a robot tool 21EXB.

As illustrated in Fig. 22(A), in the first row of the conversion table 510A, as an example, information of "iron" is registered in the field 512, an operation parameter in a case in which the humanoid robot 1 "takes an iron" is registered in the field 514, and an operation parameter for the humanoid robot 1 to "replace the gripping portion with a robot tool having the function of the iron" is registered in the field 516. This means that the operation parameter representing the operation in which the humanoid robot 1 takes an iron is converted into the operation parameter representing the corresponding operation of the humanoid robot 1.

In the second row of the conversion table 510A, as an example, the information of "iron" is registered in the field 512, an operation parameter in a case in which the humanoid robot 1 "performs ironing" is registered in the field 514, and an operation parameter for the humanoid robot 1 to "perform ironing with a robot tool having the function of the iron" is registered in the field 516.

In the third row of the conversion table 510A, as an example, the information of "iron" is registered in the field 512, an operation parameter in a case in which the humanoid robot 1 "puts away the iron" is registered in the field 514, and an operation parameter for the humanoid robot 1 to "replace the gripping portion with the original hand" is registered in the field 516.

As illustrated in Fig. 22(B), in the first row of another conversion table 510B, as an example, information of "tweezers" is registered in the field 512, an operation parameter in a case in which the humanoid robot 1 "takes tweezers" is registered in the field 514, and an operation parameter for the humanoid robot 1 to "replace a finger portion with a robot tool having a function of tweezers" is registered in the field 516.

In the second row of the conversion table 510B, as an example, the information of "tweezers" is registered in the field 512, an operation parameter in a case in which the humanoid robot 1 "presses with tweezers" is registered in the field 514, and an operation parameter for the humanoid robot 1 to "press with a robot tool having a function of tweezers" is registered in the field 516.

In the third row of the conversion table 510B, as an example, the information of "tweezers" is registered in the field 512, an operation parameter in a case in which the humanoid robot 1 "puts away the tweezers" is registered in the field 514, and an operation parameter for the humanoid robot 1 to "replace the finger portion with the original finger" is registered in the field 516.

In a case of converting the specific operation parameter into the conversion operation parameter, the conversion unit 148 illustrated in Fig. 21 has a function of adjusting the parameter such that the operation of the specific sewing equipment becomes the operation of the corresponding robot tool. As an example, in a case of converting the operation parameter representing the operation in which the humanoid robot 1 performs ironing, the conversion unit 148 in the present embodiment converts the operation parameter such that coordinate data of the robot tool 21EXB used by the humanoid robot 1 coincides with coordinate data of the iron.

### (Actions)

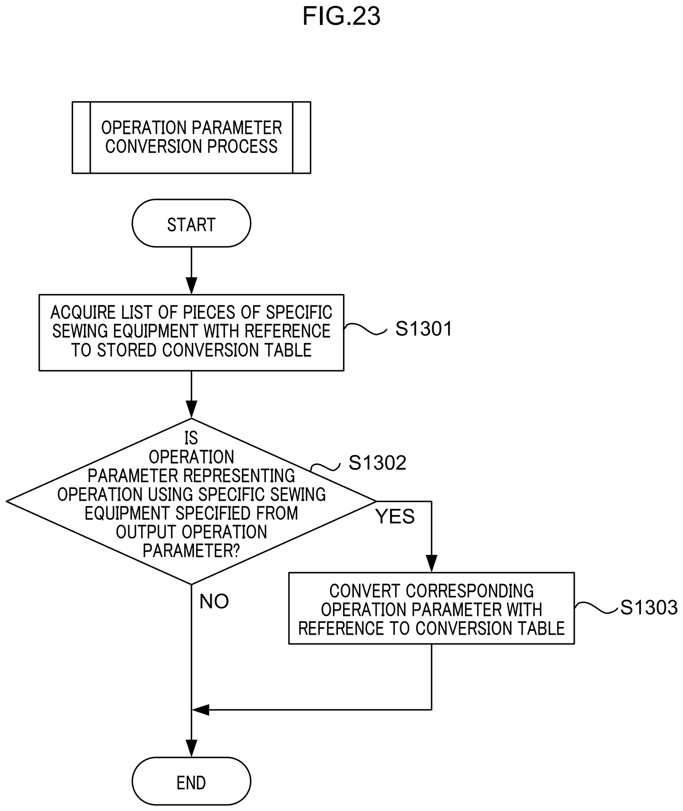

Fig. 23 is a flowchart illustrating a flow of an operation parameter conversion process of converting the operation parameter according to the fourth embodiment.

In Step S1301 of Fig. 23, a CPU 1212 refers to the stored conversion table 510 and acquires a list of pieces of specific sewing equipment. For example, the CPU 1212 acquires an iron, tweezers, and the like as a list of pieces of specific sewing equipment.

In Step S1302, the CPU 1212 determines whether or not an operation parameter representing the operation using the specific sewing equipment has been specified from the output operation parameter. In a case of determining that the operation parameter is specified (Step S1302: YES), the CPU 1212 proceeds to Step S1303. In a case in which the CPU 1212 determines that the operation parameter has not been specified (Step S1303: NO), the operation parameter conversion process ends.

In Step S1303, the CPU 1212 refers to the conversion table 510 and converts the corresponding operation parameter. Specifically, the CPU 1212 reads the conversion table 510 for each specific sewing equipment from the storage device 1224, and converts the specific operation parameter into the conversion operation parameter with reference to the read conversion table 510. Then, the CPU 1212 ends the operation parameter conversion process.

### (Summary of Fourth Embodiment)

In the fourth embodiment, the information processing apparatus 14 specifies the operation parameter representing the operation using the specific sewing equipment from the output operation parameter, and converts the specified operation parameter into the corresponding operation parameter of the humanoid robot 1. Therefore, the information processing apparatus 14 in the present embodiment can convert the specific operation of the skilled worker into the operation of the humanoid robot 1 without converting the learning data as in the third embodiment.

As long as the specific operation parameter can be specified, the information processing apparatus 14 can convert the operation parameter output from any learning model. Thus, even in a case in which the trained model is updated or changed, the information processing apparatus 14 in the present embodiment can convert the operation parameter in a case in which the specific operation parameter is specified.

The information processing apparatus 14 in the present embodiment converts the specific operation parameter into the corresponding operation parameter of the humanoid robot 1 by using the conversion table. Therefore, the information processing apparatus 14 in the present embodiment can convert the operation parameter even though the motion of the humanoid robot 1 using the specific sewing equipment represented by the output operation parameter is completely different from the motion of the humanoid robot 1 using the corresponding robot tool.

The information processing apparatus 14 converts the operation parameter by using the conversion table in which the operation of the humanoid robot 1 using the specific sewing equipment and the operation of the humanoid robot 1 using the corresponding robot tool are associated with each other. Therefore, the information processing apparatus 14 can convert the operation parameter such that the operation of the specific sewing equipment coincides with the operation of the corresponding robot tool. That is, even in a case in which the robot tool is used, the information processing apparatus 14 can control the humanoid robot 1 such that work similar to the work in a case of using the specific sewing equipment can be performed.

### [Remarks]

In the third and fourth embodiments, the "device" has been described as the "sewing equipment", but the "device" is not limited thereto. The "device" includes machines, instruments, and tools, and may be electric or not. The device may be any device that is handled by a human hand. Examples of the device include a cooking device used for cooking work, a production device used for production work of a craft, furniture, or the like, a performance device used for a stage production, a performance device used for a musical instrument performance, or the like.

In the third and fourth embodiments, the tool included in the humanoid robot 1 may be kept in the attached state until the series of works is completed, instead of being attached and detached every time the tool is used. As an example, in the humanoid robot 1, in a case in which sheets of cloth 100 and 101 are gripped by a robot tool 50A mounted on the thumb, the index finger, and the middle finger and sewing is performed by using a sewing machine 200, a robot tool 50B or a robot tool 50F may be mounted on the tips of the ring finger and the little finger. In a case in which the robot tool remains mounted, the operation in which the humanoid robot 1 replaces the robot tool may be omitted.

In the third and fourth embodiments, the robot tool is mounted by replacing the tip of the gripping portion 20 or the finger portion of the humanoid robot 1, but the method of mounting the robot tool is not limited thereto. For example, a robot tool may be built in the gripping portion 20 and the finger portion in advance, and may be exposed to the outside if necessary.

In the third embodiment, as an example, the estimation data of the skeleton of the entire body including the fingers, hands, and arms of the skilled worker is used as the learning data, but the learning data is not limited thereto. The learning data may be data of a contour of the skilled worker.

In the third embodiment, the learning device 400 converts the learning data, but the disclosure is not limited thereto. The learning data may be converted by the information processing apparatus 14, a system including a plurality of apparatuses, or the like.

In the fourth embodiment, the information processing apparatus 14 converts the operation parameter, but the disclosure is not limited thereto. The operation parameter may be converted by an external server, a system including a plurality of apparatuses, or the like.

In the third embodiment, the learning device 400 may convert the learning data of the specific operation into the learning data of the operation substituted by the humanoid robot 1. As an example, the learning device 400 converts the learning data acquired in a case in which the skilled worker operates a foot pedal to operate the operation of the sewing machine, into the learning data in which the humanoid robot 1 transmits instruction information to the sewing machine.

In the fourth embodiment, the information processing apparatus 14 may convert the specific operation parameter into the operation parameter of the operation substituted by the humanoid robot 1. As an example, the information processing apparatus 14 converts the operation parameter for operating the operation of the sewing machine by the humanoid robot 1 operating the foot pedal, into an operation parameter for transmitting instruction information to the sewing machine by the humanoid robot 1.

### (Fifth Embodiment)

Next, a fifth embodiment will be described while omitting or simplifying an overlapping portion with the above embodiments. The fifth embodiment is characterized in that a trained model is switched according to the type of workpiece. In the fifth embodiment, a case in which a humanoid robot 1 performs work of sewing clothes will be described.

The workpiece includes a raw material and an in-process product. The raw material indicates a state before being sewn, and the in-process product indicates a state in which a part is sewn. The workpiece in the present embodiment is, for example, sheets of cloth 100 and 101 as raw materials, an object obtained by sewing one sides of the sheets of cloth 100 and 101 as an in-process product, and a sleeve part sewn from the sheets of cloth 100 and 101. The workpiece may include a mixture of a raw material and an in-process product. In the present embodiment, description will be made mainly focusing on that the workpieces are the sheets of cloth 100 and 101.

### (Functions)

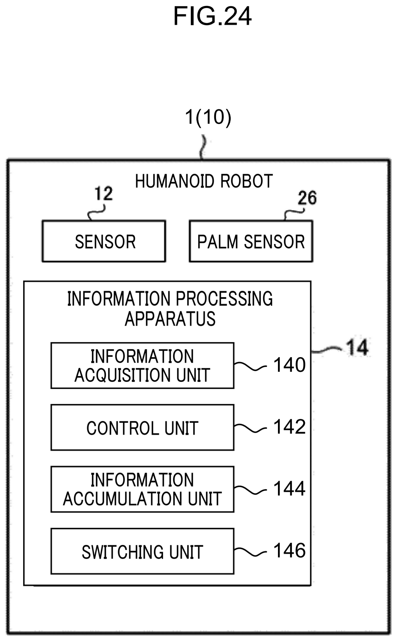

Fig. 24 is a diagram schematically illustrating an example of a functional configuration of a humanoid robot according to the fifth embodiment.

As illustrated in Fig. 24, an information processing apparatus 14 in the present embodiment functions as a switching unit 146 in addition to the functional configuration of the above-described embodiments. Unique operations of an information acquisition unit 140 and a control unit 142 as the acquisition unit in the fifth embodiment, and the switching unit 146 will be described.

The information acquisition unit 140 has a function of acquiring cloth information as workpiece information. The cloth information is information including the type of workpiece. The information of the type of the workpiece includes information of the type of a final finished product and the type of a part produced from the workpiece. As an example, the information acquisition unit 140 in the present embodiment acquires information of the sheets of cloth 100 and 101. Examples of the information of the sheets of cloth 100 and 101 include, for example, "shirt" as the type of clothing that is a final finished product, and "sleeve" as the information of the type of a part to be sewn from the sheets of cloth 100 and 101.

The information acquisition unit 140 acquires cloth information based on information detected by a sensor 12 and a palm sensor unit 26. The information acquisition unit 140 in the present embodiment acquires the cloth information based on the detected shape, aspect, and the like of the workpiece. As an example, the information acquisition unit 140 acquires "shirt" and "sleeve", which are information of the type of workpiece stored in association with the shape, from the shape unique to the sheets of cloth 100 and 101. In a case in which an identifier such as a two-dimensional code is given to the workpiece, the information acquisition unit 140 may acquire the cloth information by reading the identifier.

The control unit 142 has a function of controlling holding and the operation of the workpiece by a gripping portion 20 based on a learning model switched by the switching unit 146 which will be described later. The control unit 142 has a function of controlling the humanoid robot 1 based on a work method determined by the switching unit 146 which will be described later.

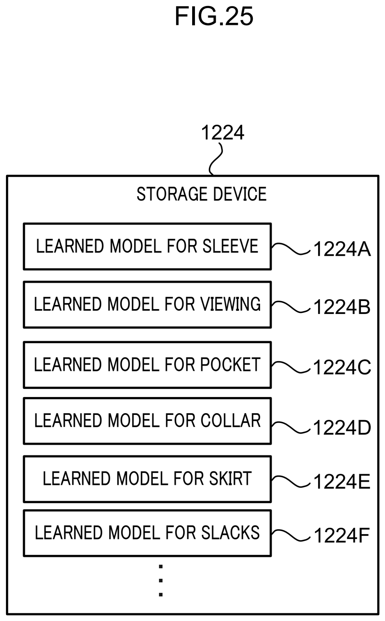

The switching unit 146 has a function of switching a plurality of trained models. The switching unit 146 in the present embodiment switches the trained model learned for each type of workpiece based on the acquired cloth information. The switching unit 146 in the present embodiment switches the learning model by changing the learning model used by the control unit 142 to one of the learned models stored in a storage device 1224 which will be described with reference to Fig. 25.

Fig. 25 illustrates the trained model learned for each type of workpiece stored in the storage device 1224. As illustrated in Fig. 25, examples of the learning models include a learned model for a sleeve 1224A, a learned model for a body 1224B, a learned model for a pocket 1224C, a learned model for a collar 1224D, a learned model for a skirt 1224E, and a learned model for slacks 1224F.

The switching unit 146 has a function of determining a work method. The switching unit 146 in the present embodiment determines the work method based on the type of clothing that is a finished product. The work method in the present embodiment is either a cell production method as a first work method or a line production method as a second work method. As an example, the switching unit 146 determines the cell production method in a case in which the type of clothing is a shirt, and determines the line production method in a case in which the type of clothing is slacks. As another example, the switching unit 146 determines the cell production method in a case in which the type of clothing is custom-made, and determines the line production method in a case in which the type of clothing is ready-made (ready-made product).

The cell production method in the present embodiment is a work method in which only one humanoid robot 1 performs a plurality of types of works. The line production method in the present embodiment is a work method in which one humanoid robot 1 performs work and then another humanoid robot 1 performs the handed-over work.

### (Actions)

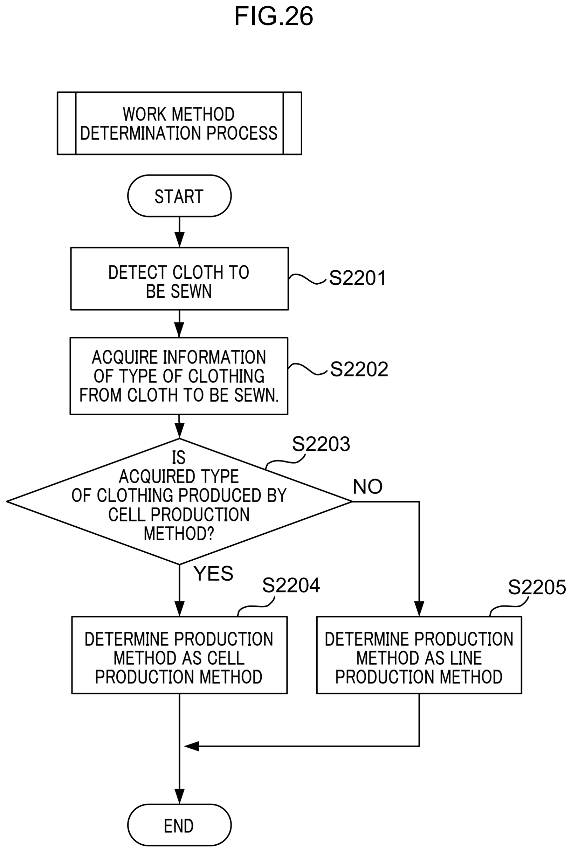

Fig. 26 is a flowchart illustrating a determination process of determining a production method according to the fifth embodiment.

In Step S2201 of Fig. 26, a CPU 1212 detects cloth to be sewn.

In Step S2202, the CPU 1212 acquires information of the type of clothing from the cloth to be sewn.

In Step S2203, the CPU 1212 determines whether or not the acquired type of clothing is produced by the cell production method. In a case of determining that the acquired type of clothing is produced by the cell production method (Step S2203: YES), the CPU 1212 proceeds to Step S2204. In a case of determining that the acquired type of clothing is not produced by the cell production method (Step S2203: NO), the CPU 1212 proceeds to Step S2205.

In Step S2204, the CPU 1212 determines the cell production method as the production method. Then, the CPU 1212 ends the determination process.

In Step S2205, the CPU 1212 determines the line production method as the production method. Then, the CPU 1212 ends the determination process.

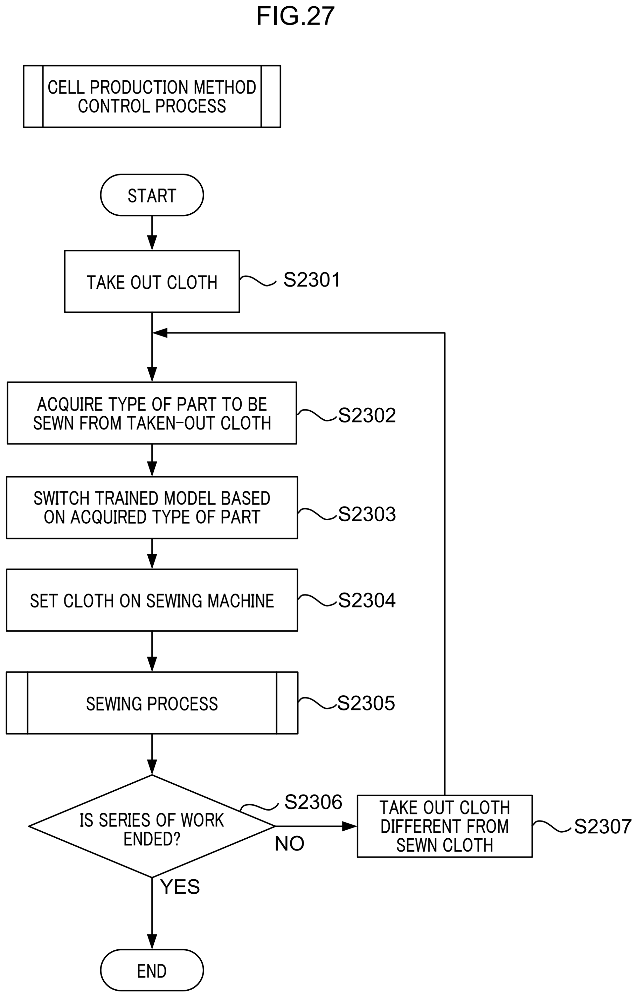

Fig. 27 is a flowchart illustrating a flow of a control process of controlling the humanoid robot 1 in a case of the cell production method according to the fifth embodiment.

In Step S2301 of Fig. 27, the CPU 1212 takes out the cloth. For example, the CPU 1212 controls the humanoid robot 1 such that sheets of cloths 100, 101 are taken out from a stocker near the humanoid robot 1.

In Step S2302, the CPU 1212 acquires the type of parts to be sewn from the taken-out cloth. As an example, the CPU 1212 acquires "sleeve" as information of the type of parts to be sewn from the sheets of cloth 100 and 101.

In Step S2303, the CPU 1212 switches the trained model based on the acquired type of the part. As an example, the CPU 1212 switches the learning model to "learned model for a sleeve".

In Step S2304, the CPU 1212 sets the cloth on the sewing machine 200. As an example, the CPU 1212 in the present embodiment sets the sheets of cloth 100 and 101 on the sewing machine 200.

In Step S2305, the CPU 1212 executes a sewing process illustrated in Fig. 4.

In Step S2306 of Fig. 27, the CPU 1212 determines whether or not a series of pieces of work has ended. In a case of determining that the series of pieces of work has not ended (Step S2306: NO), the CPU 1212 proceeds to Step S2307. In a case of determining that the series of pieces of work has ended (Step S2306: YES), the CPU 1212 ends the control process of the cell production method.

In Step S2307, the CPU 1212 takes out cloth different from the sewn cloth. In the present embodiment, cloth for "body" which is another part is taken out. Then, the CPU 1212 returns to Step S2302 and repeats the processes from Step S2302 to Step S2305. The CPU 1212 may take out a part as an in-process product instead of taking out another sheet of cloth as a raw material, and sew parts in the subsequent work.

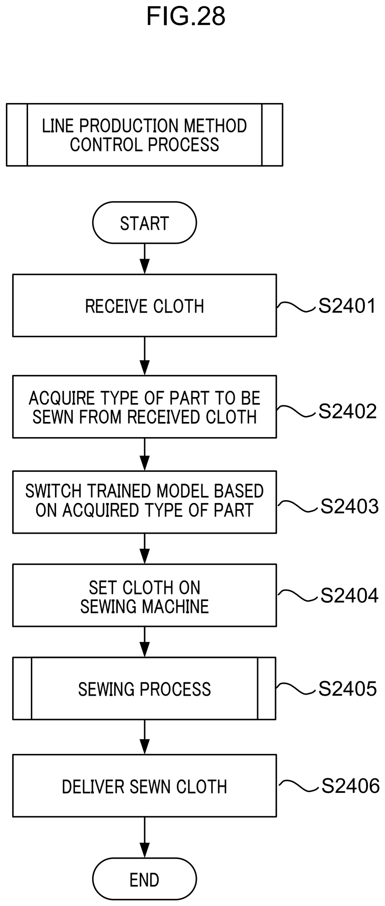

Fig. 28 is a flowchart illustrating a flow of a control process of controlling the humanoid robot 1 in a case of the line production method according to the fifth embodiment. The flowchart in Fig. 28 is a flowchart in a case in which a plurality of humanoid robots 1 perform work in cooperation with each other, and the flowchart is repeatedly performed as long as a workpiece is supplied.

In Step S2401 of Fig. 28, the CPU 1212 receives cloth. As an example, the CPU 1212 in the present embodiment receives the cloth by controlling the gripping portion 20 to grip the cloth flowing from a belt conveyor.

In Step S2402, the CPU 1212 acquires the type of parts to be sewn from the received cloth.

Processes of Steps S2403 to S2405 are similar to the processes of Steps S2303 to S2305 of Fig. 27, and the description thereof will be omitted.

In Step S2406 of Fig. 28, the CPU 1212 delivers the sewn cloth. As an example, the CPU 1212 grips the sewn cloth with the gripping portion 20 and places the cloth on the belt conveyor. Then, the CPU 1212 of the humanoid robot 1 ends the control process of the line production method. In the line production method, the humanoid robot 1 on the downstream side of the belt conveyor executes the control process related to the next step.

### (Summary of Fifth Embodiment)

In the fifth embodiment, the information processing apparatus 14 switches the trained model based on the acquired cloth information, and controls the humanoid robot 1 based on the switched learning model. Therefore, the information processing apparatus 14 can continuously handle different types of workpieces. That is, even though different types of workpieces flow in the same line, the information processing apparatus 14 can cause the humanoid robot 1 to perform work suitable for each workpiece.

In a case in which the information processing apparatus 14 switches the trained model, the humanoid robot 1 can take charge of any sewing step of a work line. That is, even in a case in which one humanoid robot 1 has failed in the middle of the work line, the next humanoid robot 1 can perform the following work instead of the failed humanoid robot 1.

In the fifth embodiment, the information processing apparatus 14 determines the production method based on the type of clothing. That is, the information processing apparatus 14 can apply one humanoid robot 1 to different production methods. That is, even in a case in which a plurality of humanoid robots 1 are arranged to enable line work, the humanoid robot 1 can perform the work while switching the production method according to the type of clothing flowing in the line. For example, the information processing apparatus 14 can control the humanoid robot 1 to perform work by switching the production method to the cell production method in a case in which the type of clothing flowing in the line is the small lot of clothing, and switching the production method to the line production method in a case in which the type of clothing is the large lot of clothing.

### [Remarks]

In the fifth embodiment, it is assumed that the switching unit 146 determines the production method based on the type of clothing, but the determined production method is not necessarily limited to one production method. For example, after sewing by the cell production method is started, the switching unit 146 may control the humanoid robot 1 to perform production by switching to the line production method from the middle. As an example, the switching unit 146 can perform work in a manner that production is performed by the cell production method until a predetermined in-process product is produced, and thereafter the production method is switched to the line production method.

In the fifth embodiment, it is assumed that a plurality of trained models are learning models for each part, but the learning model is not limited thereto. For example, a trained model may be created and switched for each piece of work. Specifically, in a case in which there are two or more portions to be sewn by using the sewing machine in one part, a trained model may be created and switched for each portion.

In the fifth embodiment, the sewing work using the sewing machine 200 has been described, but the sewing method of the humanoid robot 1 is not limited to the sewing method using the sewing machine 200. The sewing method may be, for example, a method in which a sewing needle is gripped by the gripping portion 20 and the sheets of cloth 100 and 101 are sewn, that is, by so-called hand sewing.

In the fifth embodiment, the production method may be determined by a method as described below.

As an example, the switching unit 146 acquires the type and number of sheets of cloth in the stocker, and determines the cell production method in a case in which it is determined that the cell production method can be adopted.

As another example, the switching unit 146 determines the cell production method in a case in which the production amount of the workpiece is smaller than a predetermined amount, and determines the line production method in a case in which the production amount is equal to or larger than the predetermined amount.

As still another example, the switching unit 146 determines the cell production method in a case in which the number of steps of the workpiece is smaller than a predetermined number, and determines the line production method in a case in which the number of steps is equal to or larger than the predetermined number.

### (Sixth Embodiment)

Next, a sixth embodiment will be described while omitting or simplifying an overlapping portion with the above embodiments. The sixth embodiment is characterized in that an information processing apparatus 34 causes a trained model to be re-learned by using learning data obtained from simulation. In the sixth embodiment, as an example, learning model in a case in which a humanoid robot 1 performs work of sewing sheets of cloth 100 and cloth 101 by using a sewing machine 200 will be described.

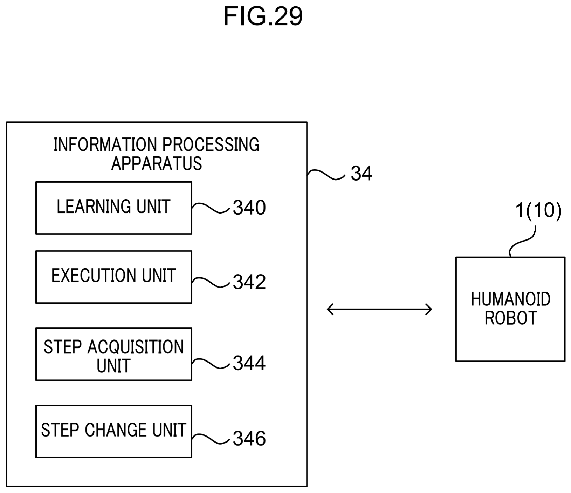

A computer functioning as the information processing apparatus 34 in the sixth embodiment has a configuration similar to that of the computer 1200 in Fig. 6. As illustrated in Fig. 29 which will be described later, the information processing apparatus 34 is configured to be able to communicate with a control system 10 of the humanoid robot 1. In the present embodiment, an information processing apparatus 14 included in the control system 10 and the information processing apparatus 34 communicate with each other via a network, whereby the trained model re-learned by information processing apparatus 34 is provided to the control system 10 of the humanoid robot 1.

Fig. 29 is a diagram schematically illustrating an example of a functional configuration of the information processing apparatus 34 according to the sixth embodiment. The information processing apparatus 34 in the present embodiment includes an execution unit 340, a step acquisition unit 342 as an acquisition unit, a step change unit 344 as a change unit, and a learning unit 346.

The execution unit 340 has a function of executing a simulation of work using a device by a robot. Here, the "device" includes machines, instruments, and tools, and may be electric or not. The device may be any device that is handled by a human hand. Examples of the device include a sewing device used for sewing work, a cooking device used for cooking work, a production device used for production work of a craft, furniture, or the like, a performance device used for a stage production, a performance device used for a musical instrument performance, or the like. In the present embodiment, the device is the sewing machine 200. The execution unit 340 executes the simulation by using the trained model. The execution unit 340 executes the simulation based on a work step which will be described later. Then, the execution unit 340 outputs a simulation result by the simulation. The execution unit 340 in the present embodiment executes the simulation of work using the sewing machine 200 by the humanoid robot 1.

The simulation is executed in a simulation environment in which a predetermined physical parameter is set. The physical parameter includes, for example, a physical parameter such as mass or friction of a workpiece. The physical parameter may include a numerical value representing an aspect of the workpiece. Examples of the aspect of the workpiece include a type (shape, size, hardness, weight, and the like) and a position of the workpiece. The physical parameter may be randomly set.

The work step is a work step of work using a device by a robot. The work step in the present embodiment is a work step in which the humanoid robot 1 sews sheets of cloth 100 and cloth 101 by using the sewing machine 200.

The simulation result is virtual data obtained from the simulation. The simulation result includes not only data that can be acquired after end of the work but also data that can be acquired during the work. The simulation result in the present embodiment includes, for example, correction data as second learning data representing the combination of an operation of the humanoid robot 1 and an operation of the sewing machine 200, data of a resultant obtained in a manner that the sheets of cloth 100 and cloth 101 are sewn, an operation parameter of a gripping portion 20, 3D coordinate data, a detection result from a sensor 12, and a detection result from a palm sensor unit 26.

The step acquisition unit 342 as the acquisition unit has a function of acquiring a work step of the robot. The step acquisition unit 342 in the present embodiment acquires the work step of the humanoid robot 1 by the simulation performed by the execution unit 340. The step acquisition unit 342 may acquire the work step of the humanoid robot 1 in a case in which the humanoid robot 1 is actually moved.

The step change unit 344 as the change unit has a function of dividing the work step into a plurality of steps. Specifically, the work step is divided by dividing the work step at predetermined time intervals.

The step change unit 344 has a function of changing a part of the work step. The step change unit 344 changes the work step based on a comparison result obtained by comparing target data which will be described later with data of a resultant as a work result of the simulation based on the work step in which a part of the step has been changed. In the present embodiment, in a case in which a difference between the target data and the data of the resultant of the simulation based on the work step in which a part of the step has been deleted is less than a predetermined threshold value, the step change unit 344 changes to this work step.

The target data is data of a resultant, which is freely set, or data of a resultant obtained from a simulation based on a work step before change. In the present example, the target data is data of a finished product obtained by sewing the cloth 100 and the cloth 101.

The data of the resultant to be compared only needs to be data that can be obtained from the simulation result, and includes numerical data (size, hardness, weight, concentration, and the like), image data, sound data, and the like. In the present embodiment, as an example, numerical data indicating a gap between sheets of cloth in a case in which the cloth 100 and the cloth 101 are sewn is compared.

The step change includes complementation of an operation of linking before and after the changed step. The linking operation is, for example, an operation of moving the gripping portion 20 obliquely upward to the right from the current position in a case in which the operation of moving the gripping portion 20 in the upward direction is deleted after moving the gripping portion 20 in the rightward direction from the current position.

The learning unit 346 has a function of learning a learning model by using learning data obtained from the operation of a skilled person during work, as basic data as first learning data. Specifically, the learning unit 346 learns the learning model by using learning data representing the combination of the operation of a skilled worker during work and the operation of a device used by the skilled worker.

The learning unit 346 has a function of re-learning the trained model by using correction data obtained from the simulation. Specifically, the learning unit 346 re-learns the trained model by using learning data representing the combination of the operation of the robot obtained from the simulation and the operation of the device used by the robot. The learning unit 346 may re-learn the trained model by using, as a re-learning data set, a plurality of pieces of learning data obtained from simulations having different physical parameters.

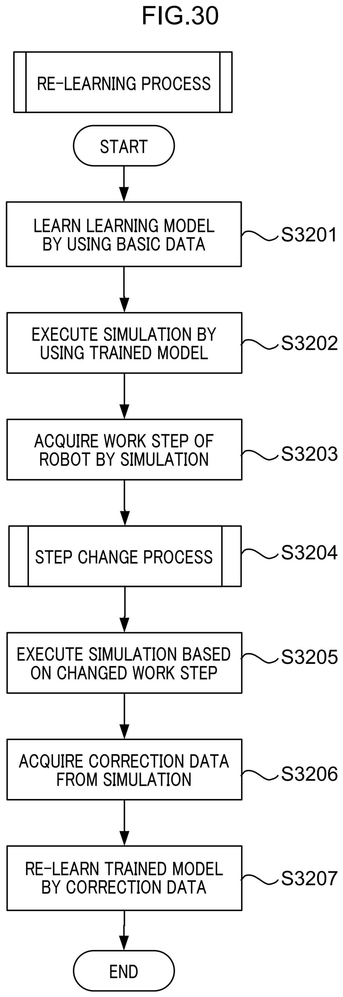

Fig. 30 is a flowchart illustrating a flow of a re-learning process of re-learning a learning model according to the sixth embodiment.

In Step S3201 of Fig. 30, the information processing apparatus 34 learns the learning model by using basic data. The basic data is learning data representing the combination of the operation of a skilled worker during work and the operation of a device used by the skilled worker.

In Step S3202, the information processing apparatus 34 executes a simulation by using the trained model. Specifically, the information processing apparatus 34 executes simulation of work using the device by the robot, by using the trained model learned in Step S3201. For example, the information processing apparatus 34 executes the simulation from the start to the end of work in which the humanoid robot 1 sews cloth 100 and cloth 101 by using the sewing machine 200.

In Step S3203, the information processing apparatus 34 acquires a work step of the robot by simulation. For example, the information processing apparatus 34 acquires time-series data including the combination of the operation parameter of the humanoid robot 1 and the operation of the sewing machine 200 as a first work step.

In Step S3204, the information processing apparatus 34 executes a step change process. Details of the step change process will be described later.

In Step S3205, the information processing apparatus 34 executes a simulation based on the changed work step. In the present embodiment, the information processing apparatus 34 executes the simulation based on the work step changed in Step S3204 as a second work step.

In Step S3206, the information processing apparatus 34 acquires correction data from the simulation. For example, the information processing apparatus 34 acquires the learning data representing the combination of the operation of the humanoid robot 1 and the operation of the sewing machine 200 from the simulation performed in Step S3205 as the correction data.

In Step S3207, the information processing apparatus 34 re-learns the trained model by the correction data. Specifically, the information processing apparatus 34 re-learns the trained model learned in Step S3201, by the correction data acquired in Step S3206. Then, the information processing apparatus 34 ends the re-learning process.

The re-learned trained model is transmitted from the information processing apparatus 34 to the control system 10 of the humanoid robot 1.

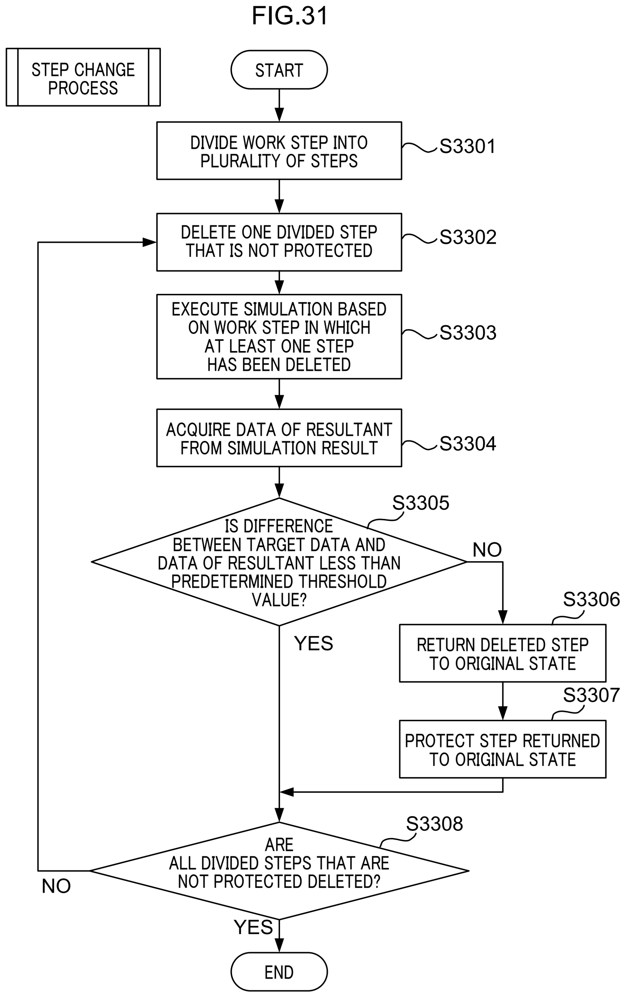

Fig. 31 is a flowchart illustrating a flow of the step change process for improving efficiency of the work step according to the sixth embodiment.

In Step S3301 of Fig. 31, the information processing apparatus 34 divides the work step into a plurality of steps.

In Step S3302, the information processing apparatus 34 deletes one divided step that is not protected. The step is protected in Step S3307 which will be described later.

In Step S3303, the information processing apparatus 34 executes a simulation based on the work step in which at least one step has been deleted. The simulation is, for example, a simulation having the same physical parameters as the simulation in Step S3201 in Fig. 30. That is, an influence on the resultant due to the change of the step is observed by executing the simulation having the same physical parameter.

In Step S3304 of Fig. 31, the information processing apparatus 34 acquires the data of the resultant as the work result from the simulation. This simulation is the simulation executed in Step S3303.

In Step S3305, the information processing apparatus 34 determines whether or not a difference between the target data and the data of the resultant is less than a predetermined threshold value. In a case in which the information processing apparatus 34 determines that the difference is not less than the predetermined threshold value (Step S3305: NO), the processing proceeds to Step S3306. In a case in which the information processing apparatus 34 determines that the difference is less than the predetermined threshold value (Step S3305: YES), the processing proceeds to Step S3308.

In Step S3306, the information processing apparatus 34 returns the deleted step to the original state. Specifically, the deleted step is the step deleted in Step S3302.

In Step S3307, the information processing apparatus 34 protects the step returned to the original state. Protecting the step means, for example, attaching a protection flag to the step returned to the original state.

In Step S3308, the information processing apparatus 34 determines whether or not all the unprotected divided steps have been deleted. In a case in which the information processing apparatus 34 determines that all the unprotected divided steps have not been deleted (Step S3308: NO), the processing proceeds to Step S3302. In a case in which the information processing apparatus 34 determines that all the unprotected divided steps have been deleted (Step S3308: YES), the information processing apparatus 34 ends the step change process.

### (Summary of Sixth Embodiment)

As described above, in the information processing apparatus 34 according to the sixth embodiment, the learning unit 346 re-learns the trained model based on the learning data obtained from the simulation executed by the execution unit 340. Thus, according to the present embodiment, since it is not necessary to actually move the robot in acquiring the learning data necessary for re-learning the learning model, it is not necessary to prepare a robot, a device, a workpiece, and the like. That is, since the learning data can be obtained from the simulation, the learning model can be re-learned only by the computer. Since a plurality of simulations can be executed in parallel, it is possible to efficiently obtain the learning data.

The learning data in the present embodiment is the learning data obtained from the simulation based on the work step in which a part of the step has been deleted by the step change unit 344. It is possible to improving efficiency of the work step of the humanoid robot 1 by the learning model re-learned based on the learning data. It is possible to remove an unnecessary operation that is included in the learning model learned from the motion of a skilled person and depends on the individual skilled person. Examples of this operation include an operation for adjusting the posture, and a preliminary operation for taking the tool.

### [Modification Example of Sixth Embodiment]

In the sixth embodiment, the learning model is re-learned by the learning data obtained from the simulation based on the work step changed by the step change process of reducing the work step, but the change of the work step is not limited thereto. Therefore, in a modification example, the learning model is re-learned by the learning data obtained from the simulation based on the work step in which a predetermined step is increased.

The predetermined step is an operation of the robot. The operation of the robot includes an operation of the robot itself and an operation in which the robot operates a device. Examples of the operation of the robot include an operation in which the humanoid robot 1 shakes a head, raises an arm, or performs a bending and stretching motion. As an example, the humanoid robot 1 can shake a hand or shake a head while performing sewing work. As another example, while performing cooking work, the humanoid robot 1 can pour seasoning such as salt and oil from a high position, or drain noodles while moving the whole body of the humanoid robot 1 up and down.

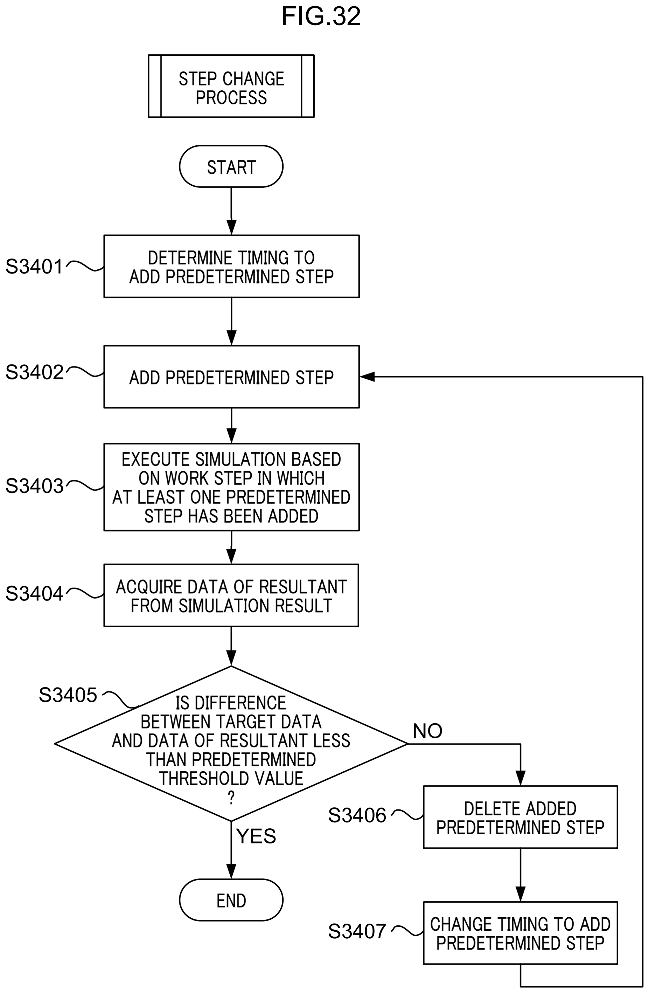

Fig. 32 is a flowchart illustrating a flow of the step change process of adding a predetermined step according to the modification example of the sixth embodiment.

In Step S3401 of Fig. 14, the information processing apparatus 34 determines a timing to add a predetermined step. The timing is selected from freely-determined timings in the acquired work step, for example.

In Step S3402, the information processing apparatus 34 adds a predetermined step.

In Step S3403, the information processing apparatus 34 executes a simulation based on a work step to which at least one predetermined step has been added.

In Step S3404, the information processing apparatus 34 acquires data of a resultant as a work result from the simulation. This simulation is the simulation executed in Step S3403.

In Step S3405, the information processing apparatus 34 determines whether or not a difference between the target data and the data of the resultant is less than a predetermined threshold value. In a case in which the information processing apparatus 34 determines that the difference is not less than the threshold value (Step S3405: NO), the processing proceeds to Step S3406. In a case in which the information processing apparatus 34 determines that the difference is less than the threshold value (Step S3405: YES), the information processing apparatus 34 ends the step change process.

In Step S3406, the information processing apparatus 34 deletes the added predetermined step.

In Step S3407, the information processing apparatus 34 changes the timing to add a predetermined step.

In the modification example of the sixth embodiment, a predetermined step is added to the work step of the humanoid robot 1. As a result, it is possible to add an operation that attracts attention to the work step. A person can see and enjoy the work step of the humanoid robot 1 by adding this operation.

### [Remarks]

In the sixth embodiment, the simulation is executed by the execution unit 340, but the execution of the simulation is not limited thereto. The simulation may be executed by an information processing apparatus provided separately from the information processing apparatus 34, a system including a plurality of devices, software, or the like.

In the sixth embodiment, the division of the work step is performed at predetermined time intervals, but the division is not limited thereto. The division may be performed in units of operations (for example, movement of an arm, change of an angle of a finger, and the like) of the humanoid robot 1, or a continuous operation may be performed in one unit.

In the sixth embodiment, the efficiency of the work step is improved by deleting one divided work step, but the efficiency improvement of the work step is not limited thereto. The efficiency of the work step may be also improved by reducing the operation parameter of the humanoid robot 1.

In re-learning of the learning model, the re-learning by the simulation according to the sixth embodiment may be performed after the re-learning using the difference from the actual work result according to the first embodiment is performed. The re-learning may be performed in an order opposite to the above order.

Although the disclosure has been described using the embodiments, the technical scope of the disclosure is not limited to the scope described in the above embodiments. It is apparent to those skilled in the art that various modifications or improvements can be made to the above embodiments. It is apparent from the description of the claims that modes to which such changes or improvements are added can also be included in the technical scope of the invention.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Even though the operation flow in the claims, the specification, and the drawings is described using "first", "next", and the like for convenience, it does not mean that it is essential to perform in this order.

Sheets of cloth 100 and 101 are taken as an example of the workpiece, and the work by the humanoid robot 1 is assumed to be the sewing work. However, the humanoid robot 1 can also be used for work other than sewing. For example, the humanoid robot 1 can be applied to cutting work using a lathe or a milling machine, welding work, and the like. That is, the humanoid robot 1 can use the machine tool used by a person, and thus it is possible to achieve the automation of the work by the robot while the existing facility is maintained. The robot is not limited to a humanoid robot as long as the robot has the gripping portion 20.

The disclosures of Japanese Patent Application No. 2023-63764 filed on April 10, 2023, Japanese Patent Application No. 2023-109653 filed on July 3, 2023, Japanese Patent Application No. 2023-126494 filed on August 2, 2023, Japanese Patent Application No. 2023-133490 and Japanese Patent Application No. 2023-133515, which have been filed on August 18, 2023, are incorporated herein by reference in their entirety.

All documents, patent applications, and technical standards described in this specification are incorporated herein by reference to the same extent as if each document, patent application, and technical standard were specifically and individually indicated to be incorporated by reference.

## Claims

1. A robot comprising:
a gripping portion that includes a palm portion serving as a base for holding a workpiece and a plurality of finger portions radially extended from the palm portion;
a palm sensor unit that is provided at the palm portion and detects workpiece information including a shape and a disposition of the workpiece; and
a control unit that controls holding and an operation of the workpiece by the gripping portion in a case in which work using the machine tool is performed with the gripping portion based on an operation parameter obtained by inputting a detection result of the palm sensor unit into a trained model learned using learning data representing a combination of an operation of a hand of a skilled worker during work and an operation of a machine tool and executing arithmetic processing of the learning model.

2. The robot according to claim 1, further comprising:
two of the gripping portions corresponding to a right hand and a left hand, wherein
the number of finger portions in one of the gripping portions is five,
the workpiece is cloth,
the machine tool is a sewing machine, and
the work is sewing.

3. The robot according to claim 1, wherein the learning model is a model re-learned using a difference between a target work result and an actual work result by the robot.

4. The robot according to claim 1, wherein a parameter given to the learning model is determined according to an aspect of the workpiece and the work.

5. The robot according to claim 1, wherein
the workpiece includes an identifier indicating a specific position, and
the control unit controls the holding and the operation of the workpiece by the gripping portion based on the detected identifier.

6. The robot according to claim 5, wherein
the control unit inputs the detection result into a trained model re-learned in a device that has output a difference between a position of the identifier in a target work result and a position of the identifier in an actual work result.

7. The robot according to claim 5, wherein
the identifier is an identification code capable of reading character information, and
the character information includes at least one of identification information of the workpiece, a work order, or the specific position.

8. The robot according to claim 5, wherein
the control unit
controls the holding and the operation of the workpiece by the gripping portion based on information from an image capturing device that captures an image of a blind spot region that is a region that cannot be detected by the palm sensor unit.

9. A robot control program that causes a computer to operate as the control unit according to any one of claims 1 to 8.

10. An information processing apparatus comprising:
an acquisition unit that acquires learning data representing a combination of an operation of a skilled worker during work and an operation of a device used by the skilled worker;
a specifying unit that specifies, from the acquired learning data, first learning data representing specific work in which the skilled worker uses a specific device; and
a conversion unit that converts the specified first learning data into second learning data for causing a robot including one or a plurality of tools corresponding to the specific device to perform an operation corresponding to the specific work.

11. The information processing apparatus according to claim 10, wherein
the conversion unit converts the first learning data based on a conversion table that stores the first learning data and the second learning data in association with each other.

12. The information processing apparatus according to claim 11, wherein
the learning data includes data of a device label that is a label indicating a type of the device and is given to the operation of the device, and
the conversion unit converts the learning data by changing the device label of the first learning data to a tool label that is a label indicating a type of the tool corresponding to the device.

13. An information processing apparatus comprising:
a specifying unit that specifies a first operation parameter representing specific work in which a robot uses a specific device, from an operation parameter obtained by inputting a detection result of a sensor unit included in the robot into a trained model learned using learning data representing a combination of an operation of a skilled worker during work and an operation of a device used by the skilled worker and executing arithmetic processing of the learning model; and
a conversion unit that converts the specified first operation parameter into a second operation parameter for causing the robot including one or a plurality of tools corresponding to the specific device to perform an operation corresponding to the specific work.

14. The information processing apparatus according to claim 13, wherein
the conversion unit converts the first operation parameter based on a conversion table that stores the first operation parameter and the second operation parameter in association with each other.

15. A learning data generation method for causing a computer to execute a process comprising:
acquiring learning data representing a combination of an operation of a skilled worker during work and an operation of a device used by the skilled worker;
specifying first learning data representing specific work in which the skilled worker uses a specific device, from the acquired learning data; and
converting the specified first learning data into second learning data for causing a robot including one or a plurality of tools corresponding to the specific device to perform an operation corresponding to the specific work.

16. An operation parameter generation method for causing a computer to execute a process comprising:
specifying a first operation parameter representing specific work in which a robot uses a specific device, from an operation parameter obtained by inputting a detection result of a sensor unit included in the robot into a trained model learned using learning data representing a combination of an operation of a skilled worker during work and an operation of a device used by the skilled worker and executing arithmetic processing of the learning model; and
converting the specified first operation parameter into a second operation parameter for causing the robot including one or a plurality of tools corresponding to the specific device to perform an operation corresponding to the specific work.

17. An information processing apparatus comprising:
an acquisition unit that acquires information of a workpiece;
a switching unit that performs switching between a plurality of trained models learned using learning data representing a combination of an operation of a hand of a skilled worker during work and an operation of a machine tool based on the information of the workpiece acquired by the acquisition unit; and
a control unit that controls holding and an operation of the workpiece by a gripping portion included in a robot based on an operation parameter obtained by inputting a detection result of a sensor unit included in the robot into the learning model switched by the switching unit and executing arithmetic processing of the learning model.

18. The information processing apparatus according to claim 17, wherein
the switching unit determines one of a plurality of work methods based on the information of the workpiece acquired by the acquisition unit,
the control unit controls the robot based on the work method determined by the switching unit, and
the plurality of work methods includes
a first work method of performing work by only one of the robots, and
a second work method of performing the work by being shared by a plurality of the robots.

19. The information processing apparatus according to claim 18, wherein
the plurality of trained models are learning models learned for each type of the workpiece,
the first work method is a cell production method, and
the second work method is a line production method.

20. An information processing apparatus comprising:
a learning unit that learns a learning model by using first learning data representing a combination of an operation of a skilled worker during work and an operation of a device used by the skilled worker;
an acquisition unit that acquires a first work step of a robot from a simulation of work using the device by the robot, the simulation being executed by using the learned model learned by the learning unit; and
a change unit that changes the first work step to a second work step in which a part of the first work step is changed based on a predetermined criterion, wherein
the learning unit re-learns the learned model by using second learning data representing a combination of an operation of the robot obtained from the simulation of the work of the robot and the operation of the device based on the second work step.

21. The information processing apparatus according to claim 20, wherein
the predetermined criterion is a comparison result between a target result that is a target work result and a work result in a case in which the simulation has been executed.

22. The information processing apparatus according to claim 21, wherein
the second work step is a work step in which at least one step is deleted from the first work step divided into a plurality of steps.

23. The information processing apparatus according to claim 22, wherein
the robot includes
two gripping portions corresponding to a right hand and a left hand,
the number of finger portions provided in one of the gripping portions is five,
the device is a sewing machine, and
the work is sewing.

24. The information processing apparatus according to claim 21, wherein
the second work step is a work step in which at least one step is added to the first work step.

25. A program for causing a computer to operate as the information processing apparatus according to any one of claims 10 to 14 or claims 17 to 24.

26. A learned model generation method for causing a computer to execute a process comprising:
learning a learning model by using first learning data representing a combination of an operation of a skilled worker during work and an operation of a device used by the skilled worker;
acquiring a first work step of a robot from a simulation of work using the device by the robot, the simulation being executed by using the learned model learned;
changing the first work step to a second work step in which a part of the first work step is changed based on a predetermined criterion; and
re-learning the learned model by using second learning data representing a combination of an operation of the robot obtained from the simulation of the work of the robot and the operation of the device based on the second work step.
